(19) Europäisches Patentamt
European Patent Office
Office européen des brevets

(11) **EP 4 641 990 A1**

(12) **EUROPEAN PATENT APPLICATION**
published in accordance with Art. 153(4) EPC

(43) Date of publication:
**29.10.2025   Bulletin 2025/44**

(21) Application number: **22969001.1**

(22) Date of filing: **23.12.2022**

(51) International Patent Classification (IPC):
**H04L 27/00** (2006.01)

(52) Cooperative Patent Classification (CPC):
**H04L 27/00**

(86) International application number:
**PCT/CN2022/141513**

(87) International publication number:
**WO 2024/130714 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZHANG, Shichang
  Dongguan, Guangdong 523860 (CN)**
• **MA, Teng
  Dongguan, Guangdong 523860 (CN)**

(74) Representative: **Mewburn Ellis LLP
Aurora Building
Counterslip
Bristol BS1 6BX (GB)**

(54) **SIDELINK COMMUNICATION METHOD, AND DEVICE**

(57)    This application relates to a sidelink communication method and apparatus. The method includes: a first terminal obtaining a transmission resource for sidelink positioning-related information based on a transmission resource for first sidelink information. The transmission resource for the sidelink positioning-related information include one or more available transmission starting points. By obtaining the transmission resource for the sidelink positioning-related information based on the transmission resource for the first sidelink information, the transmission opportunities for the sidelink positioning-related information can be increased, thereby improving positioning reliability and accuracy.

1100

FIRST TERMINAL OBTAINS TRANSMISSION RESOURCE FOR
SIDELINK POSITIONING-RELATED INFORMATION BASED ON
TRANSMISSION RESOURCE FOR FIRST SIDELINK INFORMATION ⟩── S1110

FIG. 11

**Description**

TECHNICAL FIELD

The present application relates to the field of communication, and more specifically, to a sidelink communication method and apparatus.

BACKGROUND

Sidelink communication includes sidelink over unlicensed spectrum (SL-U). On unlicensed spectrum, terminals typically need to perform listen-before-talk (LBT) before accessing the channel. If a terminal fails to complete LBT before the scheduled transmission starting port, it may miss the opportunity to transmit.

SUMMARY

Embodiments of the disclosure provide a sidelink communication method, terminal device, and network device to increase the transmission opportunities for sidelink positioning-related information.

The embodiments provide a sidelink communication method, including: a first terminal obtains a transmission resource for sidelink positioning-related information based on a transmission resource for first sidelink information. The transmission resource for the sidelink positioning-related information includes one or more available transmission starting points.

The embodiments provide a sidelink communication method, including: a first terminal receives first information, which is used to configure or preconfigure a transmission resource for sidelink positioning-related information within a sidelink bandwidth part (SL BWP) or a shared resource pool. The transmission resource for the sidelink positioning-related information includes one or more available transmission starting points.

The embodiments provide a sidelink communication method, including: a network device transmits first information to a first terminal, the first information is used to configure or preconfigure for the first terminal a transmission resource for sidelink positioning-related information within an SL BWP or a shared resource pool. The transmission resource for the sidelink positioning-related information includes one or more available transmission starting points.

The embodiments provide a first terminal, including: a processing unit, configured to obtain a transmission resource for sidelink positioning-related information based on a transmission resources for first sidelink information. The transmission resource for the sidelink positioning-related information includes one or more available transmission starting points.

The embodiments provide a first terminal, including: a receiving unit, configured to receive first information, the first information is used to configure or preconfigure a transmission resource for sidelink positioning-related information within an SL BWP or a shared resource pool. The transmission resource for the sidelink positioning-related information includes one or more available transmission starting points.

The embodiments provide a network device, including: a transmitting unit, configured to transmit first information to a first terminal, the first information is used to configure or preconfigure for the first terminal a transmission resource for sidelink positioning-related information within an SL BWP or a shared resource pool. The transmission resource for sidelink positioning-related information includes one or more available transmission starting points.

The embodiments provide a terminal device, including a processor and a memory. The memory is configured to store computer programs, and the processor is configured to call and run the computer programs stored in the memory to cause the terminal device to perform the aforementioned sidelink communication method.

The embodiments provide a network device, including a processor and a memory. The memory is configured to store computer programs, and the processor is configured to call and run the computer programs stored in the memory to cause the network device to perform the aforementioned sidelink communication method.

The embodiments provide a chip for implementing the aforementioned sidelink communication method. Specifically, the chip includes: a processor, configured to call and run computer programs from the memory to cause a device equipped with the chip to perform the aforementioned sidelink communication method.

The embodiments provide a computer-readable storage medium for storing computer programs. When the computer program is run by a device, it causes the device to perform the aforementioned sidelink communication method.

The embodiments provide a computer program product, including computer program instructions that cause a computer to perform the aforementioned sidelink communication method.

The embodiments provide a computer program which, when run on a computer, causes the computer to perform the aforementioned sidelink communication method.

BRIEF DESCRIPTION OF THE DRAWINGS

Figure 1 illustrates a slot structure with partial symbols used for sidelink transmission according to an embodiment of the disclosure.

Figure 2 illustrates a sidelink slot structure with physical sidelink control channel (PSCCH) and physical sidelink shared channel (PSSCH) according to an embodiment of the disclosure.

Figure 3 illustrates the demodulation reference signal (DMRS) for PSSCH according to an embodiment of the disclosure.

Figure 4 illustrates the two types of frequency-domain DMRS patterns supported in new radio physical downlink shared channel (NR PDSCH) and physical uplink shared channel (PUSCH) according to an embodiment of the disclosure.

Figure 5 illustrates a resource pool for PSCCH and PSSCH in NR-V2X according to an embodiment of the disclosure.

Figure 6 illustrates a slot structure in an NR system according to an embodiment of the disclosure.

Figure 7 illustrates determination of time-domain resources in NR-V2X according to an embodiment of the disclosure.

Figure 8 illustrates an interlaced resource block structure according to an embodiment of the disclosure.

Figure 9 illustrates a frame structure based on interlaced resource blocks according to an embodiment of the disclosure.

Figure 10 illustrates resource block (RB) sets according to an embodiment of the disclosure.

Figure 11 illustrates a flowchart of a sidelink communication method according to an embodiment of the disclosure.

Figure 12 illustrates a flowchart of another sidelink communication method according to an embodiment of the disclosure.

Figure 13 illustrates a flowchart of another sidelink communication method according to an embodiment of the disclosure.

Figure 14 illustrates a flowchart of another sidelink communication method according to an embodiment of the disclosure.

Figure 15 illustrates a flowchart of another sidelink communication method according to an embodiment of the disclosure.

Figure 16 illustrates a flowchart of another sidelink communication method according to an embodiment of the disclosure.

Figure 17 illustrates a flowchart of another sidelink communication method according to an embodiment of the disclosure.

Figure 18 illustrates the transmission of sidelink positioning reference signals (SL PRS) based on listen before talk (LBT) completion time according to an embodiment of the disclosure.

Figure 19 illustrates a block diagram of a first terminal according to an embodiment of the disclosure.

Figure 20 illustrates a block diagram of another first terminal according to an embodiment of the disclosure.

Figure 21 illustrates a block diagram of another first terminal according to an embodiment of the disclosure.

Figure 22 illustrates a block diagram of a network device according to an embodiment of the disclosure.

Figure 23 illustrates a block diagram of a communication device according to an embodiment of the disclosure.

Figure 24 illustrates a block diagram of a chip according to an embodiment of the disclosure.

Figure 25 illustrates a block diagram of a communication system according to an embodiment of the disclosure.

DETAILED DESCRIPTION

Technical solutions of the disclosure will be described in conjunction with the accompanying drawings in the embodiments of the disclosure.

The technical solutions of the disclosure can be applied to various communication systems, such as global system for mobile communication (GSM), code division multiple access (CDMA), wideband code division multiple access (WCDMA), general packet radio service (GPRS), long term evolution (LTE), advanced long term evolution (LTE-A), new radio (NR), evolved NR systems, NR-based access to unlicensed spectrum (NR-U), non-terrestrial networks (NTN), universal mobile telecommunication system (UMTS), wireless local area networks (WLAN), WiFi, 5G systems, or other communication systems.

Generally speaking, traditional communication systems support a limited number of connections and are relatively easy to implement. However, with the development of communication technologies, mobile communication systems will not only support traditional communications but also support various types of communications, such as device-to-device (D2D) communication, machine-to-machine (M2M) communication, machine type communication (MTC), vehicle-to-vehicle (V2V) communication, or vehicle-to-everything (V2X) communication. The embodiments of the disclosure can also be applied to these communication systems.

In an implementation, the communication system in the embodiments can support various scenarios, including carrier aggregation (CA), dual connectivity (DC), and standalone (SA) networking scenarios.

In an implementation, the communication system in the embodiments can operate on unlicensed spectrum (which can also be considered shared spectrum) or licensed spectrum (which can be considered non-shared spectrum).

The embodiments of the disclosure describe various examples in combination with network devices and terminal devices. Here, the terminal device may also be referred to as a user equipment (UE), access terminal, user unit, user station, mobile station, mobile terminal, remote station, remote terminal, mobile device, user terminal, terminal, wireless communication device, user agent, or user device, etc.

The terminal device can be a station (ST) in WLAN, a cellular phone, a cordless phone, a session initiation protocol (SIP) phone, a wireless local loop (WLL) station, a personal digital assistant (PDA) device, a handheld device with wireless communication functions, a computing device, or other processing devices connected to a wireless modem, a vehicular device, a wearable device, a terminal device in the next-generation communication system such as an NR network, or a terminal device in the future-evolved public land mobile network (PLMN).

In the embodiments of the disclosure, the terminal device can be deployed on land, including indoor or outdoor, handheld, wearable, or vehicular; the terminal device can also be deployed on water (such as on ships); or in the air (e.g., on airplanes, balloons, and satellites).

In the embodiments of the disclosure, the terminal device can be a mobile phone, a tablet (Pad), a computer with wireless transceiver functions, a virtual reality (VR) terminal device, an augmented reality (AR) terminal device, a wireless terminal device in industrial control, a wireless terminal device in self-driving, a wireless terminal device in remote medical care, a wireless terminal device in the smart grid, a wireless terminal device in transportation safety, a wireless terminal device in a smart city, or a wireless terminal device in a smart home, etc.

As an example rather than a limitation, the terminal device in the embodiments of the disclosure can also be a wearable device. Wearable devices, also known as wearable smart devices, are a general term for devices that apply wearable technology to design daily wearables intelligently and can be worn, such as glasses, gloves, watches, clothing, and shoes. Wearable devices are portable devices that can be worn directly on the body or integrated into the user's clothing or accessories. Wearable devices are not only hardware devices but also powerful functional devices supported by software, data interaction, and cloud interaction. Broadly speaking, wearable smart devices include those with full functions and large sizes that can operate independently or partially without smartphones, such as smartwatches or smart glasses, and those that focus on a specific application function and need to be used in conjunction with other devices like smartphones, such as various smart bands and smart jewelry for physiological monitoring.

In the embodiments of the disclosure, the network device can be a device for communication with mobile devices. The network device can be an access point (AP) in WLAN, a base transceiver station (BTS) in GSM or CDMA, a NodeB (NB) in WCDMA, an evolved Node B (eNB or eNodeB) in LTE, or a relay station or access point, or a network device in a vehicular or wearable device, or a network device (gNB) in an NR network, or a network device in a future-evolved PLMN or NTN network.

As an example rather than a limitation, the network device in the embodiments of the disclosure can have mobility characteristics, such as being a mobile device. Optionally, the network device can be a satellite or a balloon station. For example, the satellite can be a low earth orbit (LEO) satellite, a medium earth orbit (MEO) satellite, a geostationary earth orbit (GEO) satellite, or a high elliptical orbit (HEO) satellite. Optionally, the network device can also be a base station located on land or water.

In the embodiments of the disclosure, the network device can provide service to a cell, and the terminal device communicates with the network device through the transmission resources used by the cell (e.g., frequency-domain resources, or spectrum resources). The cell can be the cell corresponding to the network device (e.g., a base station), and the cell can belong to a macro base station or a small cell base station. The small cell here can include: a Metro cell, a Micro cell, a Pico cell, a Femto cell, etc. These small cells have the characteristics of small coverage and low transmission power, and are suitable for providing high-speed data transmission services.

It should be understood that the terms "system" and "network" are often used interchangeably in this disclosure. The term "and/or" in this disclosure is merely a description of the relationship between associated objects, indicating that three possible relationships can exist, for example, A and/or B can represent: A exists alone, A and B exist simultaneously, or B exists alone. Additionally, the character "/" in this application generally indicates that the associated objects before and after it have an "or" relationship.

It should be understood that the "indication" mentioned in the embodiments of the disclosure can be direct indication, indirect indication, or an indication of an associative relationship. For example, A indicates B, which can mean that A directly indicates B (e.g., B can be obtained through A); it can also mean that A indirectly indicates B (e.g., A indicates C, and B can be obtained through C); or it can indicate that there is an associative relationship between A and B.

In the description of the embodiments of the disclosure, the term "corresponding" can indicate a direct or indirect correspondence between two entities, or it can indicate an associative relationship, or it can represent an indication and being indicated, a configuration and being configured, etc.

To facilitate the understanding of the technical solution of the disclosure, the relevant technologies of the disclosure are explained below. These relevant technologies can be combined with the technical solution of the disclosure at will, and all belong to the scope of protection of the disclosure.

## NR-V2X Slot Structure

In NR-V2X, the physical sidelink shared channel (PSSCH) and its associated physical sidelink control channel (PSCCH) are transmitted in the same slot, with PSCCH occupying 2 or 3 time-domain symbols. The time-domain resource allocation in NR-V2X is based on slot granularity. The start and length of time-domain symbols used for sidelink transmission in a slot are configured by parameters *sl-startSLsymbols* and *sl-lengthSLsymbols* respectively. The last symbol in these symbols is used as a guard period (GP), and PSSCH and PSCCH can only use the remaining time-domain symbols. If a slot is configured with physical sidelink feedback channel (PSFCH) transmission resources, PSSCH and PSCCH cannot occupy the time-domain symbols used for PSFCH transmission as well as the automatic gain control (AGC) and GP symbols preceding those symbols

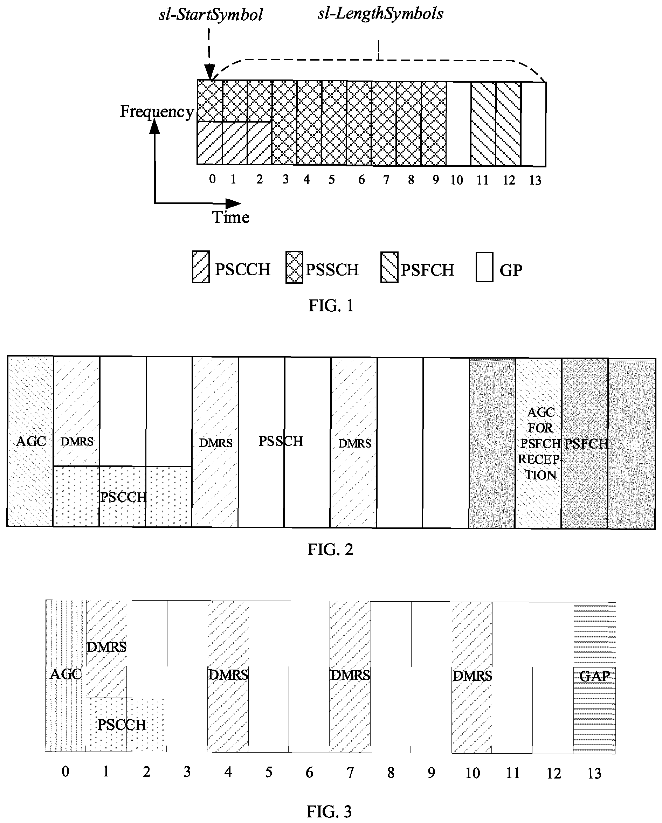

As illustrated in Figure 1, the network configures that the sidelink start symbol (*sl-StartSymbol*) is 0, and the length of sidelink symbols (*sl-LengthSymbols*) is 14, which means that 14 time-domain symbols starting from symbol index #0 in a slot are available for sidelink transmission. In this slot, there are PSFCH transmission resources, and the PSFCH occupies symbols 11 and 12, with symbol 11 serving as the AGC symbol for PSFCH. Symbols 10 and 13 are used as GP. The time-domain symbols available for PSSCH transmission are symbols #0 to #9. The PSCCH occupies three time-domain symbols, namely symbols 0, 1, and 2, with symbol 0 typically used as the AGC symbol.

In NR-V2X, in addition to PSCCH and PSSCH, PSFCH may also exist in a sidelink slot, as illustrated in Figure 2. It can be seen that in a slot, the first OFDM symbol is always used for AGC. On the AGC symbol, the UE copies the information transmitted on the second symbol. At the end of the slot, one symbol is reserved for transmit/receive switching, allowing the UE to switch from the transmission (or reception) state to the reception (or transmission) state. Among the remaining OFDM symbols, the PSCCH can occupy two or three OFDM symbols starting from the second sidelink symbol. In the frequency domain, the number of physical resource blocks (PRBs) occupied by the PSCCH is within the subband range of a PSSCH. If the number of PRBs occupied by the PSCCH is less than the size of a subchannel of the PSSCH, or if the frequency-domain resources of the PSSCH include multiple subchannels, then on the OFDM symbols where the PSCCH is located, the PSCCH can be frequency-division multiplexed with the PSSCH.

In NR-V2X, the DMRS for PSSCH draws on the design of the NR Uu interface and employs multiple time-domain PSSCH DMRS patterns. In a resource pool, the number of DMRS patterns that can be used is related to the number of symbols of the PSSCH in the resource pool. For a specific number of PSSCH symbols (including the first AGC symbol) and PSCCH symbols, examples of the available DMRS patterns and the positions of each DMRS symbol within the patterns are illustrated in Table 1. Figure 3 provides a schematic diagram of the time-domain positions of four DMRS symbols when the PSSCH occupies 13 symbols.

Table 1: Number and position of DMRS symbols under different numbers of PSSCH and PSCCH symbols

| Number of PSSCH symbols (Including the first AGC symbol) | Position of DMRS symbols (with respect to the first AGC symbol) | | | | | |
|---|---|---|---|---|---|---|
| | Number of PSCCH symbols is 2 | | | Number of PSCCH symbols is 3 | | |
| | Number of DMRS symbols | | | Number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 3 | 3, 10 | 1, 6, 11 | 1, 4, 7, 10 | 4, 10 | 1, 6, 11 | 1, 4, 7, 10 |

If multiple time-domain DMRS patterns are configured in a resource pool, the specific time-domain DMRS pattern to be used is selected by the transmitting UE and indicated in the first-order SCI. This design allows UEs in high-speed motion to select high-density DMRS patterns to ensure the accuracy of channel estimation. In contrast, for UEs in low-speed motion, low-density DMRS patterns can be used to improve spectral efficiency.

The generation method of the PSSCH DMRS sequence is almost entirely the same as that of the PSCCH DMRS sequence, with the main difference lying in the initialization formula of the pseudo-random sequence.

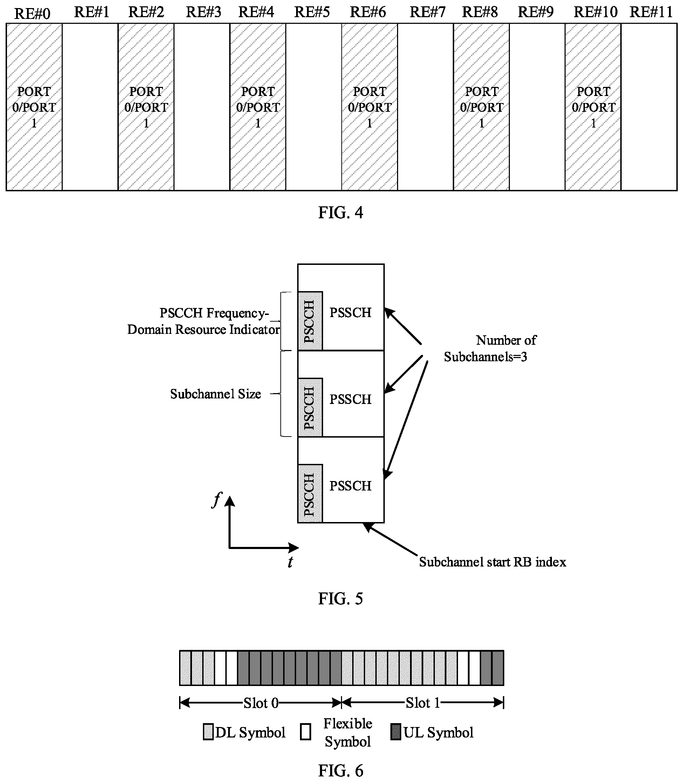

In NR PDSCH and PUSCH, two types of frequency-domain DMRS patterns are supported, namely DMRS frequency-domain Type 1 and DMRS frequency-domain Type 2. Moreover, for each frequency-domain type, there are two different types of symbols: single-DMRS-symbol and double-DMRS-symbol. Single-symbol DMRS frequency-domain Type 1 supports 4 DMRS ports, and single-symbol DMRS frequency-domain Type 2 can support 6 DMRS ports. In the case of double DMRS symbol, the number of supported ports is doubled. However, in NR-V2X, since PSSCH needs to support at most only two DMRS ports, only single-symbol DMRS frequency-domain Type 1 is supported. As illustrated in Figure 4, ports #0 and #1 can occupy the same two resource elements (RE), but with different masks.

**NR-V2X Frequency-Domain Resources**

Similar to LTE-V2X, the frequency-domain resources in NR-V2X resource pools are continuous, and the allocation granularity is subchannel-based. The number of PRBs in a subchannel can be {10, 12, 15, 20, 50, 75, 100}, with the minimum subchannel size being 10 PRBs, which is larger than the minimum subchannel size of 4 PRBs in LTE-V2X. This is because in NR-V2X, the frequency-domain resources for PSCCH are located within the first subchannel of the associated PSSCH, and the frequency-domain resources for PSCCH are less than or equal to the size of one subchannel of PSSCH, while PSCCH occupies 2 or 3 OFDM symbols in the time domain. If the subchannel size is configured to be small, it would result in limited available resources for PSCCH, increased coding rate, and reduced detection performance of PSCCH. In NR-V2X, the size of the PSSCH subchannel is configured independently of the frequency-domain resource size of the PSCCH. However, it must be ensured that the size of the frequency-domain resource for the PSCCH is less than or equal to the size of the PSSCH subchannel.

In NR-V2X, the following configuration parameters in resource pool configuration information are used to determine the frequency-domain resources in the PSCCH and PSSCH resource pools.

Subchannel size (*sl-SubchannelSize*): Indicates the number of consecutive PRBs included in a subchannel in the resource pool. The possible values are {10, 12, 15, 20, 50, 75, 100} PRBs.

Number of subchannels (*sl-NumSubchannel*): Indicates the number of subchannels included in the resource pool.

Start RB Index of subchannel (*sl-StartRB-Subchannel*): Indicates the starting PRB index of the first subchannel in the resource pool.

Number of PRBs (*sl-RB-Number*): Indicates the number of consecutive PRBs included in the resource pool.

Frequency resource indicator for PSCCH (*sl-FreqResourcePSCCH*): Indicates the size of frequency-domain resource for the PSCCH. The possible values are {10, 12, 15, 20, 25} PRBs.

When a UE determines the resource pool for PSSCH transmission or reception, the frequency-domain resources of the resource pool include multiple consecutive subchannels with the number indicated by *sl-NumSubchannel* and starting from the PRB indicated by *sl-StartRB-Subchannel.* If the number of PRBs included in the *sl-NumSubchannel* consecutive subchannels is less than the number of PRBs indicated by *sl-RB-Number,* the remaining PRBs cannot be used for PSSCH transmission or reception.

In NR-V2X, the frequency-domain starting position of the PSCCH is aligned with the first subchannel of the associated PSSCH. Therefore, the starting position of each PSSCH subchannel is a possible frequency-domain starting position for the PSCCH. Based on the above parameters, the frequency-domain range of the PSCCH and PSSCH resource pools can be determined, as illustrated in Figure 5, which provides an example of the PSCCH and PSSCH resource pools in NR-V2X.

In NR-V2X, the PSCCH is used to carry sidelink control information related to resource sensing, which may include the following examples.

Priority of the scheduled transmission.

Frequency-domain resource allocation, indicating the number of frequency-domain resources for the PSSCH in the current slot scheduled by the PSCCH, as well as the number and starting position of the frequency-domain resources reserved for up to two retransmission resources.

Time-domain resource allocation, indicating the time-domain positions of up to two retransmission resources.

Reference signal pattern for the PSSCH.

Format of the second-order sidelink control information (SCI).

Code rate offset of the second-order SCI.

Number of DMRS ports for the PSSCH.

Modulation and coding scheme (MCS).

MCS table indicator.

Number of PSFCH symbols.

Resource reservation period, reserving resources for the transmission of another transport block (TB) in the next period. If resource reservation between TBs is not activated in the resource pool configuration, this information bit field does not exist.

Reserved bits: 2 to 4 bits, with the specific number of bits configured by the network or preconfigured.

Since the PSCCH is always transmitted in the same slot as the scheduled PSSCH, and the starting position of the PRBs occupied by the PSCCH is the same as that of the first subchannel of the scheduled PSSCH, the SCI format 1-A does not explicitly indicate the time-frequency starting position of the scheduled PSSCH

**Determination of NR-V2X Time-Domain Resources (Slots)**

In NR-V2X, the transmission of PSCCH/PSSCH is slot based, meaning that only one PSCCH/PSSCH can be transmitted within a single slot. Time division multiplexing (TDM) is not supported for transmitting multiple PSCCH/PSSCH within the same slot. However, PSCCH/PSSCH for different users can be multiplexed within a single slot using frequency division multiplexing (FDM). In NR-V2X, the time-domain resources for PSSCH are defined on a slot basis. Different from LTE-V2X where PSSCH occupies all time-domain symbols within a subframe, in NR-V2X, PSSCH can occupy only part of symbols within a slot. This is mainly because, in LTE systems, uplink or downlink transmission is in subframe-based granularity, and sidelink transmission also follows this subframe-based granularity. In time division duplex (TDD) systems, the special subframes are not used for sidelink transmission. In contrast, NR systems adopt a flexible slot structure, where a single slot can include both uplink and downlink symbols. This enables more flexible scheduling and reduces latency. A typical NR subframe is illustrated in Figure 6, where a slot can include downlink (DL) symbols, uplink (UL) symbols, and flexible symbols. DL symbols are located at the beginning of the slot, while UL symbols are at the end of the slot. The flexible symbols are between DL and UL symbols, and the number of each type of symbol within a slot is configurable.

As previously mentioned, sidelink transmission systems can share carriers with cellular systems. In such cases, sidelink transmission can only use the uplink transmission resources of the cellular system. For NR-V2X, if sidelink transmission were to occupy all time-domain symbols within a slot, the network would need to configure full-uplink slots for sidelink transmission, this would significantly impact the uplink and downlink data transmission of the NR system, thereby degrading system performance. Therefore, NR-V2X supports the use of only a subset of time-domain symbols within a slot for sidelink transmission, i.e., some uplink symbols within a slot are used for sidelink transmission. Additionally, considering that sidelink transmission includes AGC symbols and GP symbols, if the number of uplink symbols available for sidelink transmission is limited, fewer symbols are available for effective data transmission, resulting in low resource utilization. Therefore, in NR-V2X, the minimum number of time-domain symbols occupied by sidelink transmission is 7 (including GP symbols). When the sidelink transmission system uses a dedicated carrier, there is no issue of sharing transmission resources with other systems, and all symbols within a slot can be configured for sidelink transmission.

In the NR-V2X system, the time-domain resources of the resource pool are also indicated by a bitmap. Considering the flexible slot structure in the NR system, the length of the bitmap has been extended, with a supported range of [10:160]. The method of using the bitmap to determine the slot positions belonging to the resource pool within a system frame number (SFN) period is the same as in LTE-V2X, but there are the following differences: in the NR-V2X system, the total number of slots within an SFN period is $10240 \times 2^\mu$, where parameter $\mu$ is related to the subcarrier spacing; if a slot contains time-domain symbols *Y, Y+1, Y+2, ..., Y+X-1,* and at least one of these symbols is not configured as an uplink symbol by the *TDD-UL-DL-ConfigCommon signaling* from the network, then the slot cannot be used for sidelink transmission. Here, *Y* and *X* represent *sl-StartSymbol* and *sl-LengthSymbols,* respectively.

The specific steps are as follows.

Step 1: Within the SFN period, slots that do not belong to the resource pool are excluded, including synchronization slots and slots that cannot be used for sidelink transmission, etc. The remaining slots are represented as the set of remaining slots and are renumbered as $(l_0, l_1, \cdots, l_{(10240 \times 2^\mu - N_{S\_SSB} - N_{nonSL} - 1)})$.

Where $N_{S\_SSB}$ represents the number of synchronization slots within an SFN period. The synchronization slots are determined based on synchronization-related configuration parameters, which are related to the period of the synchronization signal and PBCH block (SSB) transmission and the number of transmission resources configured for SSB within the period.

$N_{nonSL}$ represents the number of slots within an SFN period that do not meet the configuration of uplink symbol starting point and quantity: if a slot contains time-domain symbols *Y, Y+1, Y+2, ..., Y+X-1,* and at least one of these symbols is not semi-statically configured as an uplink symbol, then the slot cannot be used for sidelink transmission. Here, *Y* and *X* represent *sl-StartSymbol* and *sl-LengthSymbols,* respectively.

Step 2: Determine the number of reserved slots and their corresponding time-domain positions.

If the number of slots in the set of remaining slots cannot be evenly divided by the length of the bitmap, it is necessary to determine the number of reserved slots and their corresponding time-domain positions. Specifically, if a slot $l_r$ ($0 \leq r < 10240 \times 2^\mu - N_{S\_SSB} - N_{nonSL}$) meets the following condition, then the slot is a reserved slot.

$$r = \left\lfloor \frac{m \cdot (10240 \times 2^\mu - N_{S\_SSB} - N_{nonSL})}{N_{reserved}} \right\rfloor$$

$N_{reserved} = (10240 \times 2^\mu - N_{S\_SSB} - N_{nonSL}) \bmod L_{bitmap}$ represents the number of reserved slots, $L_{bitmap}$ represents the length of the bitmap, $m = 0,..., N_{reserved} - 1$.

Step 3: In the set of remaining slots, remove the reserved slots, and the remaining set of slots is referred to as the logical slot set, where all slots in such set are available for the resource pool. The slots in the logical slot set are renumbered as ( $t_0^{SL}, t_1^{SL}, \ldots, t_{T_{max}-1}^{SL}$ ). Here, the maximum slot index $T_{max} = 10240 \times 2^\mu - N_{S\_SSB} - N_{nonSL} - N_{reserved}$.

Step 4: Determine the slots belonging to the resource pool within the logical slot set based on the bitmap.

The bitmap in the resource pool configuration information is denoted as $(b_0, b_1,...,b_{L_{bitmap}-1})$. For a slot $t_k^{SL}$ in the logical slot set ($0 \leq k < (10240 \times 2^\mu - N_{S\_SSB} - N_{nonSL} - N_{reserved})$), the slot belongs to the resource pool when $b_{k'} = 1$, where $k' = k \bmod L_{bitmap}$.

Step 5: Renumber the slots determined to belong to the resource pool in Step 4 as $t'^{SL}_i$, where $i \in \{0, 1, ..., T_{max} - 1\}$. Here, $T'_{max}$ represents the number of slots included in the resource pool.

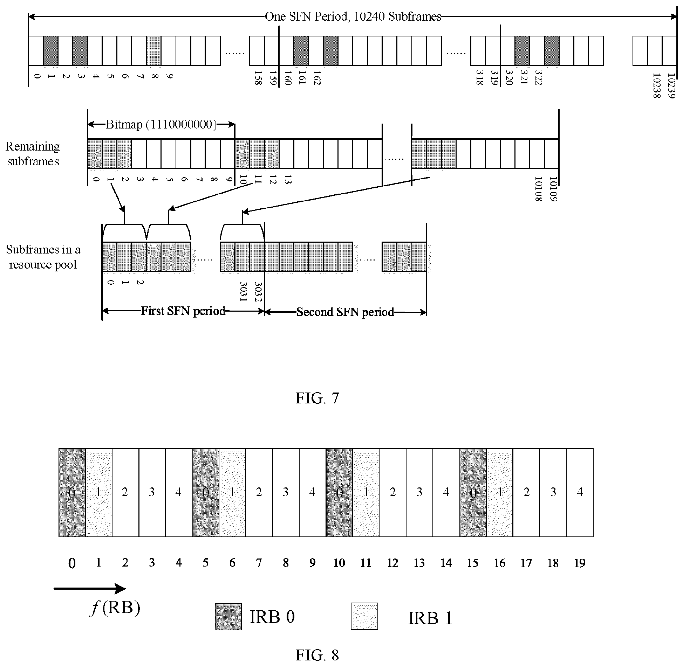

As illustrated in Figure 7, one SFN period (or direct frame number (DFN) period) has 10240 subframes. The period of the synchronization signal is 160 ms, and within a synchronization period, there are 2 synchronization subframes. Therefore, within an SFN period, there are a total of 128 synchronization subframes. The length of the bitmap used to indicate the time-domain resources of the resource pool is 10 bits, which requires 2 reserved subframes. The number of remaining subframes is 10240-128-2=10110, which can be evenly divided by the length of the bitmap, 10. The remaining subframes are renumbered as 0, 1, 2, ..., 10109. The first 3 bits of the bitmap are 1, and the remaining 7 bits are 0. That is, among the remaining subframes, the first 3 subframes out of every 10 subframes belong to the resource pool, while the rest do not. Since the bitmap needs to be repeated 1011 times within the remaining subframes to indicate whether all subframes belong to the resource pool, and each bitmap period has 3 subframes, there are a total of 3033 subframes belonging to the resource pool within an SFN period.

**Mode 2 Resource Selection in NR-V2X**

Mode 2 resource selection is supported in NR-V2X, where the UE excludes resources reserved by other UEs based on detected PSCCH transmissions from other UEs, and selects resources for data transmission from the remaining resources.

The Mode 2 resource selection is performed in the following two steps.

Step 1: The UE considers all available resources within the resource selection window as resource set A.

If the UE transmits data in certain slots within the listening window without listening, all resources in the corresponding slots within the selection window are excluded. The UE determines the corresponding slots within the selection window based on the values of the "resource reservation period" field in the resource pool configuration.

If the UE detects a PSCCH within the listening window, the UE measures the reference signal received power (RSRP) of the PSCCH or the RSRP of the PSSCH scheduled by the PSCCH. If the measured RSRP exceeds a sidelink reference signal received power (SL-RSRP) threshold and the resources reserved are determined as within the resource selection window according to the resource reservation information in the sidelink control information transmitted in the PSCCH, the corresponding resources are excluded from resource set A. If the remaining resources in resource set A are less than X% of the total resources in resource set A before resource exclusion, the SL-RSRP threshold is increased by 3 dB, and Step 1 is repeated. The possible values for X are {20, 35, 50}, and the UE determines the parameter X based on the priority of the data to be transmitted. The SL-RSRP threshold is also related to the priority carried in the detected PSCCH and the priority of the data to be transmitted by the UE. The UE considers the remaining resources in resource set A after resource exclusion as the candidate resource set.

Step 2: The UE randomly selects several resources from the candidate resource set for its initial transmission and retransmissions.

In 3GPP Release 17, studies were conducted on "NR Positioning Enhancements" and "Scenarios and Requirements for In-Coverage, Partial-Coverage, and Out-of-Coverage NR Positioning Use Cases." The research on "Scenarios and Requirements for In-Coverage, Partial-Coverage, and Out-of-Coverage NR Positioning Use Cases" focused on V2X and public safety use cases. Additionally, the standard specifies requirements for "ranging-based services" and defines positioning accuracy requirements for IIoT applications in out-of-coverage scenarios. 3GPP needs to investigate and develop sidelink positioning solutions to support the use cases, scenarios, and requirements identified in these activities. To improve positioning accuracy, especially for UE positioning outside cellular coverage, 3GPP introduced sidelink positioning based on sidelink positioning reference signals (PRS) in Release 18. According to current conclusions, SL-PRS can be transmitted within dedicated resource pools. However, to support sidelink positioning and sidelink communication, UEs also need to transmit and receive sidelink positioning-related UE discovery information, configuration information, measurement reporting information, as well as control and data information related to sidelink communication. These pieces of information need to be carried over sidelink channels, such as PSCCH and/or PSSCH.

## Sidelink Over Unlicensed Spectrum (SL-U)

When performing sidelink transmission over unlicensed spectrum (SL-U), sidelink transmission needs to meet specific requirements, which includes the minimum occupied channel bandwidth (OCB) and the maximum power spectral density (PSD) requirements. For the OCB requirement, when the UE uses the channel for data transmission, the occupied channel bandwidth must be not less than 80% of the configured channel bandwidth. For the PSD requirement, the transmission power of the UE per 1 MHz must not exceed 10 dBm. To meet the OCB and PSD requirements, SL-U needs to adopt an interlaced resource block (IRB) structure. An IRB consists of N discrete RBs in the frequency domain, and there are M IRBs within the bandwidth. The RBs included in the m-th IRB are {m, M+m, 2M+m, 3M+m, ...}.

As illustrated in Figure 8, the system bandwidth consists of 20 resource blocks (RBs), including 5 IRBs (i.e., M = 5), with each IRB containing 4 RBs (i.e., N = 4). The frequency-domain spacing between two adjacent RBs within the same IRB is the same, that is, they are separated by 5 RBs. The numbers within the boxes in Figure 8 each represent an IRB index.

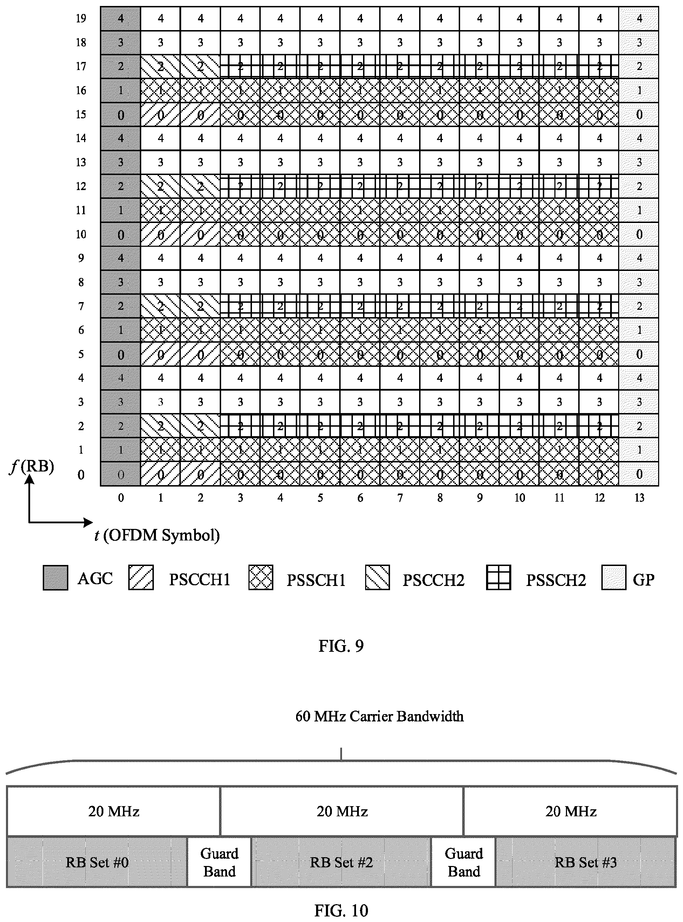

In the SL-U system, if an IRB-based resource allocation granularity is adopted, channels such as the PSCCH and PSSCH in the SL-U system should be based on the IRB structure. In this case, the frame structure of the SL-U system is illustrated in Figure 9, where the numbers within the boxes each represent the IRB index. Figure 9 illustrates a frame structure in which only the PSCCH and PSSCH are included within the slot, and the PSFCH is not included. The bandwidth illustrated in Figure 9 consists of 20 RBs, with 5 IRB resources configured, i.e., M = 5, and each IRB resource contains 4 RBs. The numbers within the boxes each indicate the IRB index. In Figure 9, the system configures the PSCCH to occupy 1 IRB resource and 2 OFDM symbols in the time domain. The PSSCH is based on IRB granularity. The first symbol within the slot is AGC symbol, and the last symbol is GP symbol. In Figure 9, PSSCH 1 occupies IRB #0 and IRB #1, and its corresponding PSCCH 1 occupies IRB #0. PSSCH 2 occupies IRB #2, and its corresponding PSCCH 2 also occupies IRB #2. It should be noted that, for simplicity, Figure 9 does not illustrate the resources occupied by the second-order SCI as well as the resources occupied by the PSCCH DMRS and PSSCH DMRS.

On the unlicensed spectrum, the UE accesses the channel through LBT. LBT operates with a frequency-domain granularity of 20 MHz, with each 20 MHz referred to as a RB set. A carrier may consist of multiple RB sets, and there are guard intervals (or guard bands) between RB Sets, as illustrated in Figure 10.

On the unlicensed spectrum, the UE must first perform LBT and can only access the channel after a successful LBT. However, the time required for the UE to complete LBT is uncertain. If the UE is restricted to transmit only from the start of a slot, the UE may miss the transmission opportunity because the UE has not completed LBT prior to the start of the slot. Therefore, in SL-U, it is considered to introduce a transmission starting point within a slot, that is, adopt multi-start transmission. For example, the additional starting point could be the 3rd or 4th OFDM symbol within the slot.

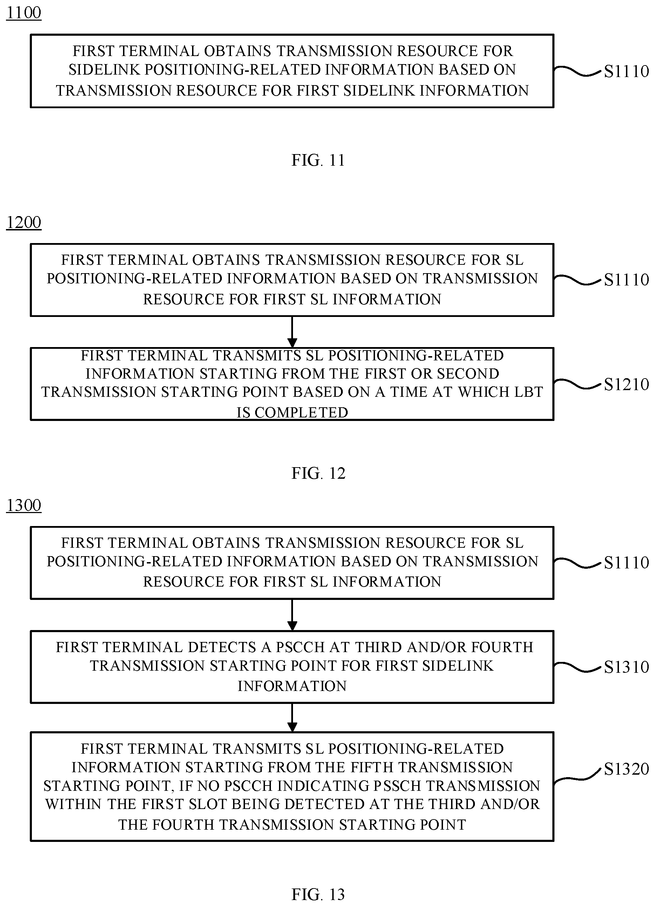

Figure 11 illustrates a flowchart of a sidelink communication method according to an embodiment of the disclosure. The method includes at least part of the following.

S1110: A first terminal obtains a transmission resource for sidelink positioning-related information based on a transmission resource for first sidelink information. The transmission resource for the sidelink positioning-related information include one or more available transmission starting points.

In the embodiments, the first terminal can perform sidelink communication with a second terminal. The first terminal can transmit the first sidelink information to the second terminal. The first sidelink information can include sidelink channels and/or sidelink signals. The transmission resource for the first sidelink information can include transmission starting points for the first terminal to send the first sidelink information, which can be referred to as available transmission starting points for the first sidelink information. For example, these available starting points can include two or more OFDM symbols within a slot that can be used for sidelink transmission.

On the unlicensed spectrum, before the first terminal sends the first sidelink information to the second terminal, the first terminal needs to perform LBT. After a successful LBT, the first terminal can then send the first sidelink information to the second terminal. The available transmission starting points for sidelink positioning-related information can be determined based on the available starting points for the first sidelink information.

In one implementation, the sidelink positioning-related information includes SL PRS and/or channels indicating SL PRS transmission.

For example, the first terminal can determine the available starting points for SL PRS based on the available starting points for the first sidelink information. The first terminal can also determine the available transmission starting points for channels indicating SL PRS transmission based on the available transmission starting points for the first sidelink information.

In one implementation, the first sidelink information includes the PSCCH and/or the PSSCH carrying sidelink data.

For example, the first terminal can determine the available transmission starting points for SL PRS based on the available transmission starting points for the PSCCH and/or PSSCH in SL-U. The first terminal can also determine the available transmission starting points for channels indicating SL PRS transmission based on the available transmission starting points for the PSCCH and/or PSSCH in SL-U.

In one implementation, within a shared resource pool for the sidelink positioning-related information and the first sidelink information, the available transmission starting points for the sidelink positioning-related information are the same as those for the first sidelink information.

For example, the shared resource pool can be a resource pool shared by SL PRS and PSCCH and/or PSSCH in SL-U. Within this shared resource pool, the available transmission starting points for SL PRS can be the same as those for the PSCCH and/or PSSCH. If the PSCCH and/or PSSCH have multiple available transmission starting points (S1, S2, and S3) within a slot, SL PRS can also have the same available transmission starting points (S1, S2, and S3) within that slot.

Similarly, the shared resource pool can be a resource pool shared by the channel indicating SL PRS transmission and PSCCH and/or PSSCH in SL-U. If the PSCCH and/or PSSCH have multiple available starting points (S1, S2, and S3) within a slot, the channel indicating SL PRS transmission can also have the same available starting points (S1, S2, and S3) within that slot.

Similarly, the shared resource pool can be a resource pool shared by SL PRS, the channel indicating SL PRS transmission, and PSCCH and/or PSSCH in SL-U. Within this shared resource pool, SL PRS, the channel indicating SL PRS transmission, and PSCCH and/or PSSCH in SL-U can all have the same available transmission starting points (S1, S2, and S3).

The number and signs of available transmission starting points in the embodiments are merely examples and not limitations. In actual applications, they can be flexibly chosen according to specific needs.

In one implementation, first and second transmission starting points exist within a slot of the shared resource pool. The first transmission starting point is a first OFDM symbol which is the first symbol that can be used for sidelink transmission within the slot, and the second transmission starting point is a second OFDM symbol that can be used for sidelink transmission after the first OFDM symbol.

In the embodiments, a shared resource pool may include multiple slots. The transmission resources for the first sidelink information within different slots can be the same or different. In a slot, if the transmission resource for the first sidelink information include first and second transmission starting points, these starting points can also be the available transmission starting points for SL PRS or the channel indicating SL PRS transmission. For example, the first transmission starting point can be a first OFDM symbol which is the first symbol that can be used for sidelink transmission within a slot (e.g., OFDM symbol #0), and the second transmission starting point can be a second OFDM symbol within the slot (e.g.,

OFDM symbol #3) after the first OFDM symbol. The available transmission starting points for SL PRS can include OFDM symbol #0 and OFDM symbol #3. The available transmission starting points for the channel indicating SL PRS transmission can also include OFDM symbol #0 and OFDM symbol #3.

In one implementation, as illustrated in Figure 12, based on the above method, the method 1200 further includes the following.

S1210: the first terminal starts to transmit the sidelink positioning-related information from the first or second transmission starting point based on the time of completing LBT.

For example, if the first terminal completes LBT before the first transmission starting point within a slot, it can transmit SL PRS or the channel indicating SL PRS transmission starting from the first transmission starting point.

Alternatively, if the first terminal completes LBT after the first transmission starting point but before the second transmission starting point within a slot, it can transmit SL PRS or the channel indicating SL PRS transmission starting from the second transmission starting point.

In one implementation, whether multiple transmission starting points are allowed in the shared resource pool and the position of the second transmission starting point are determined based on configuration information of the shared resource pool, preconfiguration information of the shared resource pool, or standard definitions.

In the embodiments, the first terminal can receive configuration information or preconfiguration information from the network device. The configuration information or preconfiguration information can indicate whether multiple transmission starting points are allowed in the shared resource pool and the transmission resources for the first sidelink information. For example, the configuration information or preconfiguration information can also indicate the positions of the first and/or second transmission starting points. If the first transmission starting point is defaulted to the first symbol of a slot, the configuration information or preconfiguration information can only indicate the second transmission starting point. Additionally, whether multiple transmission starting points are allowed in the shared resource pool as well as the positions of the first and/or second transmission starting points, etc. can be determined by standard definitions or protocol-based specifications, which can be flexibly chosen according to specific needs.

In one implementation, the sidelink positioning-related information and the first sidelink information are frequency-division multiplexed.

In the embodiments, if the sidelink positioning-related information and the first sidelink information have the same available transmission starting points within a slot, the sidelink positioning-related information and the first sidelink information can be frequency-division multiplexed at these available transmission starting points. For example, SL PRS, the channel indicating SL PRS transmission, PSCCH in SL-U, and PSSCH in SL-U can occupy different frequency-domain resources (e.g., RBs) at the same available transmission starting point.

In one implementation, the bandwidth occupied by the sidelink positioning-related information is less than the total bandwidth of the shared resource pool.

For example, the bandwidth occupied by SL PRS is less than the total bandwidth of the shared resource pool. Similarly, the bandwidth occupied by the channel indicating SL PRS transmission is less than the total bandwidth of the shared resource pool.

In one implementation, the bandwidth occupied by sidelink positioning-related information includes one or more RB sets in the shared resource pool.

For example, the bandwidth occupied by SL PRS includes RB set #1 and RB set #2 of the shared resource pool. Similarly, the bandwidth occupied by the channel indicating SL PRS transmission includes RB set #3 of the shared resource pool.

In the embodiments, some slots in the shared resource pool may have PSFCH, while others may not. The presence of PSFCH within a slot can be configured by the network or preconfigured. In the embodiments, slots in the shared resource pool that do not have PSFCH are referred to as first slots, and those that have PSFCH are referred to as second slots. The available transmission starting points within these two types of slots are described below.

In one implementation, within a first slot of the shared resource pool for the sidelink positioning-related information and the first sidelink information (where PSFCH is not present), the available starting points for the sidelink positioning-related information include the available starting points for the first sidelink information.

In one implementation, the available transmission starting points for the sidelink positioning-related information are more than those for the first sidelink information.

For example, in the shared resource pool for SL PRS and PSCCH and/or PSSCH in SL-U, the available transmission starting points for SL PRS can include and more than those for the PSCCH and/or PSSCH. If the PSCCH and/or PSSCH have multiple available transmission starting points S1, S2, and S3 within a slot, SL PRS can have additional available transmission starting points S4, S5, etc. within that slot in addition to S1, S2, and S3.

Similarly, in the shared resource pool for the channel indicating SL PRS transmission and PSCCH and/or PSSCH in SL-U, the available transmission starting points for the channel indicating SL PRS transmission can include and more than those for the PSCCH and/or PSSCH. If the PSCCH and/or PSSCH have multiple available starting points S1, S2, and S3 within a slot, the channel indicating SL PRS transmission can have additional available starting points S4, S5, etc. within that slot in addition to S1, S2, and S3.

In one implementation, within the first slot of the shared resource pool, there is a third transmission starting point and fourth transmission starting point, the third transmission starting point is a first OFDM symbol within the first slot which is the first symbol that can be used for sidelink transmission, and the fourth transmission starting point is a fourth OFDM symbol that can be used for sidelink transmission and after the third OFDM symbol. The available transmission starting points for sidelink positioning-related information include the third transmission starting point, the fourth transmission starting point and at least one fifth transmission starting point. The fifth transmission starting point is a fifth OFDM symbol within the first slot that can be used for transmitting sidelink positioning-related information but not for transmitting the first sidelink information.

In the embodiments, in a slot, if the transmission resource for the first sidelink information include the third transmission starting point and the fourth transmission starting point, these starting points can also be the available transmission starting points for SL PRS or the channel indicating SL PRS transmission. Additionally, available transmission starting points for SL PRS or the channel indicating SL PRS transmission can have other available starting points different from the third and fourth transmission starting points. For example, the third transmission starting point can be a first OFDM symbol (e.g., OFDM symbol #0) within a slot which is the first symbol that can be used for sidelink transmission, and the fourth transmission starting point can be a second OFDM symbol (e.g., OFDM symbol #4) within the slot. The available transmission starting points for SL PRS and/or the channel indicating SL PRS transmission can include OFDM symbol #0 and OFDM symbol #4. The available transmission starting points for SL PRS and/or the channel indicating SL PRS transmission can also have a fifth transmission starting point different from OFDM symbol #0 and OFDM symbol #4. The fifth transmission starting point (e.g., OFDM symbol #5) can be after the fourth transmission starting point. The fifth transmission starting point (e.g., OFDM symbol #3) can also be between the third and fourth transmission starting points.

In one implementation, based on the above methods, as illustrated in Figure 13, the fifth transmission starting point is after the fourth transmission starting point, and the method 1300 further includes the following.

S1310: The first terminal detects PSCCH at the position of the third and/or fourth transmission starting points for the first sidelink information.

S1320: If no PSCCH indicating PSSCH transmission within the first slot is detected at the position of the third and/or fourth transmission starting points for the first sidelink information, the first terminal starts to transmit sidelink positioning-related information from the fifth transmission starting point.

In the embodiments, if no PSCCH is detected by the first terminal before the third transmission starting point within the first slot, the first terminal can transmit SL PRS and/or the channel indicating SL PRS transmission at the third transmission starting point or any available transmission starting point after the third transmission starting point within the first slot. If no PSCCH is detected by the first terminal before the fourth transmission starting point within the first slot, the first terminal can transmit SL PRS and/or the channel indicating SL PRS transmission at the fourth transmission starting point or any available transmission starting point after the fourth transmission starting point within the first slot. If no PSCCH is detected by the first terminal before the fifth transmission starting point within the first slot, the first terminal can transmit SL PRS and/or the channel indicating SL PRS transmission at the fifth transmission starting point within the first slot.

If PSCCH is detected by the first terminal at the position of the third and/or fourth transmission starting points within the first slot, the first terminal can refrain from transmitting SL PRS and/or the channel indicating SL PRS transmission. This can avoid the impact of SL PRS and/or the channel indicating SL PRS transmission transmitted by the first terminal on the AGC of a terminal(s) receiving PSCCH and/or PSSCH carrying sidelink data.

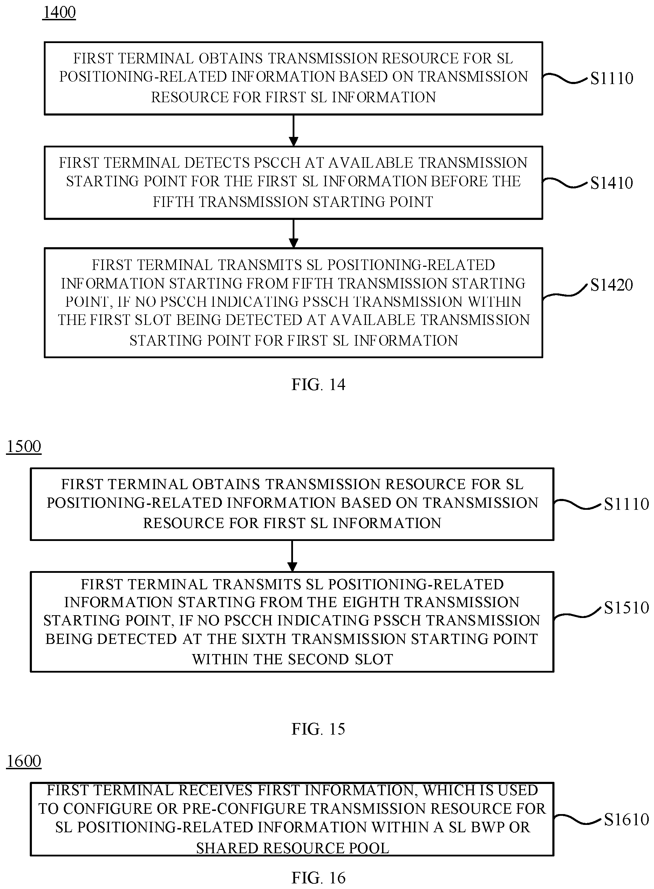

In one implementation, based on the above methods, as illustrated in Figure 14, the fifth transmission starting point is between the third and fourth transmission starting points, and the method 1400 further includes the following.

S1410: The first terminal detects PSCCH at the position of an available transmission starting point(s) for the first sidelink information before the fifth transmission starting point.

S1420: If no PSCCH indicating PSSCH transmission within the first slot is detected at the position of the available transmission starting point(s) before the fifth transmission starting point for the first sidelink information, the first terminal transmits sidelink positioning-related information starting from the fifth transmission starting point.

In the embodiments, the fifth transmission starting point is between the third and fourth transmission starting points, if PSCCH is detected by the first terminal at the third transmission starting point before the fifth transmission starting point, the first terminal will not transmit SL PRS and/or the channel indicating SL PRS transmission at the fifth transmission starting point. If no PSCCH is detected by the first terminal at the third transmission starting point, the first terminal can transmit SL PRS and/or the channel indicating SL PRS transmission at the fifth transmission starting point. Similarly, if no PSCCH is detected at the fifth transmission starting point, the first terminal can transmit SL PRS and/or the channel indicating SL PRS transmission at the fourth transmission starting point.

In one implementation, if the first terminal transmits sidelink positioning-related information at the fifth transmission starting point, the bandwidth used by the first terminal for transmitting the sidelink positioning-related information is equal to the total bandwidth of the shared resource pool. In this case, the sidelink positioning-related information transmitted at the fifth transmission starting point cannot be frequency-division multiplexed with other information.

In one implementation, if the first terminal starts transmitting sidelink positioning-related information at the third or fourth transmission starting point, the bandwidth used by the first terminal for transmitting the sidelink positioning-related information is less than the total bandwidth of the shared resource pool. In this case, the sidelink positioning-related information transmitted at the third and/or fourth transmission starting points and the first sidelink information can be frequency-division multiplexed.

In one implementation, the index $n$ of the last starting point symbol within the first slot that can be used for transmitting sidelink positioning-related information is not greater than $N-p$, where $N$ is the index of the last OFDM symbol within the first slot that can be used for sidelink transmission, and $p$ is the minimum number of OFDM symbols occupied by a transmission resource for sidelink positioning-related information.

For example, if the index $N$ of the last OFDM symbol within the first slot that can be used for sidelink transmission is 13, and the minimum number $p$ of OFDM symbols occupied by a transmission resource for sidelink positioning-related information is 3, then the index $n$ of the last starting pint symbol that can be used for transmitting sidelink positioning-related information can be 8, 9, or 10, etc.

In one implementation, within a second slot of the shared resource pool for the sidelink positioning-related information and the first sidelink information, where PSFCH is present, the available transmission starting points for the sidelink positioning-related information include at least one of the following: a sixth transmission starting point, which is the first symbol within the second slot that can be used for sidelink transmission; a seventh transmission starting point, which is the first symbol within the second slot that can be used for PSFCH transmission; a eighth transmission starting point, which is a symbol within the second slot other than the sixth and/or seventh OFDM symbols.

In the embodiments, the eighth transmission starting point can be after the seventh transmission starting point or between the sixth and seventh transmission starting points. For example, within the second slot, the sixth OFDM symbol is OFDM symbol #0, the seventh OFDM symbol is OFDM symbol #4, and the eighth OFDM symbol can be OFDM symbol #5 or OFDM symbol #2.

In one implementation, the available transmission starting points for sidelink positioning-related information include the sixth OFDM symbol within the second slot, and RBs are configured for transmitting sidelink positioning-related information on the OFDM symbol available for PSFCH transmission. The first terminal transmits sidelink positioning-related information starting from the seventh OFDM symbol.

For example, the sixth OFDM symbol is OFDM symbol #0, the OFDM symbol available for PSFCH transmission is OFDM symbol #2, and the seventh OFDM symbol is OFDM symbol #4. If RBs are configured for transmitting SL PRS and/or the channel indicating SL PRS transmission on OFDM symbol #2, transmission of the SL PRS and/or the channel indicating SL PRS transmission can be started from OFDM symbol #4.

In one implementation, the eighth transmission starting point is between the sixth and seventh transmission starting points and can be used for transmitting sidelink positioning-related information.

For example, the eighth OFDM symbol between the sixth and seventh OFDM symbols is OFDM symbol #2. Transmission of the SL PRS and/or the channel indicating SL PRS transmission can be started from this OFDM symbol #2.

In one implementation, the index n of the last OFDM symbol that can be used for transmitting sidelink positioning-related information before the OFDM symbol available for PSFCH transmission is not greater than $N-3-p+1$, where $N$ is the index of the last OFDM symbol within the slot that can be used for sidelink transmission, and $p$ is the minimum number of OFDM symbols occupied by a transmission resource for sidelink positioning-related information.

For example, if the index $N$ of the last OFDM symbol within the second slot that can be used for sidelink transmission is 13, and the minimum number $p$ of OFDM symbols occupied by a transmission resource for sidelink positioning-related information is 3, then $N-3-p+1=8$. If the OFDM symbol available for PSFCH transmission is OFDM symbol #2, the index n of the last OFDM symbol that can be used for transmitting SL PRS and/or the channel indicating SL PRS transmission before OFDM symbol #2 is 1. Therefore, $n$ is not greater than $N-3-p+1$.

In one implementation, the value of $p$ is configured by the network, preconfigured, or defined by the standard.

In one implementation, based on the above methods, as illustrated in Figure 15, the method 1500 further includes the following.

S1510: If no PSCCH indicating PSSCH transmission is detected at the sixth transmission starting point within the second slot by the first terminal, the first terminal starts to transmit sidelink positioning-related information from the eighth transmission starting point.

In the embodiments, if PSCCH is detected by the first terminal at the sixth transmission starting point (i.e., the sixth OFDM symbol) within the second slot, the first terminal will not transmit SL PRS and/or the channel indicating SL PRS transmission at any available transmission starting point after the sixth transmission starting point. If no PSCCH is detected at the sixth transmission starting point by the first terminal, the first terminal can transmit SL PRS and/or the channel indicating SL PRS transmission at the seventh or eighth transmission starting point. Similarly, if the eighth transmission starting point is after the seventh transmission starting point and no PSCCH is detected at the seventh transmission starting point, the first terminal can transmit SL PRS and/or the channel indicating SL PRS transmission at the eighth transmission starting point. If the eighth transmission starting point is between the sixth and seventh transmission starting points and no PSCCH is detected at the eighth transmission starting point, the first terminal can transmit SL PRS and/or the channel indicating SL PRS transmission at the seventh transmission starting point.

In one implementation, if the first terminal transmits sidelink positioning-related information at the eighth transmission starting point, the bandwidth used by the first terminal for transmitting sidelink positioning-related information is the same as the bandwidth of the shared resource pool.

In the embodiments, the sidelink positioning-related information transmitted at the eighth transmission starting point within the second slot may not be frequency-division multiplexed with other information.

In one implementation, the sidelink communication method further includes: if there is an overlap between the transmission resource for the sidelink positioning-related information and the resource reserved by a second terminal, the first terminal excludes the transmission resource for the sidelink positioning-related information.

For example, within the first slot or second slot, if the first terminal detects that there is an overlap between the available transmission starting points for the sidelink positioning-related information and the resource reserved by the second terminal (e.g., on the same symbol), the first terminal will not use these overlapping resources to transmit SL PRS and/or the channel indicating SL PRS transmission.

In the embodiments of the disclosure, by obtaining the transmission resource for the sidelink positioning-related information based on the transmission resource for the first sidelink information, it is possible to utilize the transmission resource for the first sidelink information to increase the transmission opportunities for the sidelink positioning-related information. For example, within a slot, two or more available transmission starting points can be provided for sidelink positioning-related information. This helps improve the reliability and accuracy of positioning.

Figure 16 is a schematic flowchart of a sidelink communication method 1600 according to another embodiment of the disclosure. The method includes at least part of the following.

S1610: a first terminal receives first information, where the first information is used to configure or preconfigure a transmission resource for sidelink positioning-related information within a BWP or in a shared resource pool, and the transmission resource for the sidelink positioning-related information include one or more available transmission starting points.

In this application embodiment, the first terminal can receive first information from the network device. The first information can be used to configure or pre-configure the transmission resource for the sidelink positioning-related information within the SL BWP or the shared resource pool.

In one implementation, the transmission resource for the sidelink positioning-related information includes available transmission starting points for the sidelink positioning-related information. For example, the first information can configure or pre-configure, within a slot, one or more available transmission starting points for the SL PRS and/or for the channel indicating SL PRS transmission. The first terminal can transmit the SL PRS and/or the channel indicating SL PRS transmission starting from the configured or pre-configured available transmission starting points.

In one implementation, the first information includes a first configuration and/or a first pre-configuration. The first configuration is used to configure the available transmission starting points for the sidelink positioning-related information, and the first pre-configuration is used to pre-configure the available transmission starting points for the sidelink positioning-related information.

In one implementation, the first information includes a second configuration and/or a second pre-configuration. The second configuration is used to configure the available transmission starting points for the first sidelink information, and the second pre-configuration is used to pre-configure the available transmission starting points for the first sidelink information.

In the embodiments, after receiving the second configuration and/or second pre-configuration, the first terminal can obtain the available transmission starting points for the sidelink positioning-related information based on the available transmission starting points for the first sidelink information in the manner described in the above embodiments.

In one implementation, the available transmission starting points for the sidelink positioning-related information include the available transmission starting points for the first sidelink information. For example, the available transmission starting points for the sidelink positioning-related information are the same as those for the first sidelink information, or the available transmission starting points for the sidelink positioning-related information are more than those for the first sidelink information. See the relevant examples in the above embodiments, which will not be repeated here.

In one implementation, the first sidelink information includes PSCCH and/or PSSCH carrying sidelink data.

In one implementation, the sidelink positioning-related information includes SL PRS and/or the channel indicating SL PRS transmission.

In one implementation, the first information can also be used to configure or pre-configure whether multiple transmission starting points are allowed in the shared resource pool.

In this embodiment, the same terms used here have the same meanings as those in the above method embodiments and can refer to the relevant descriptions in the above embodiments.

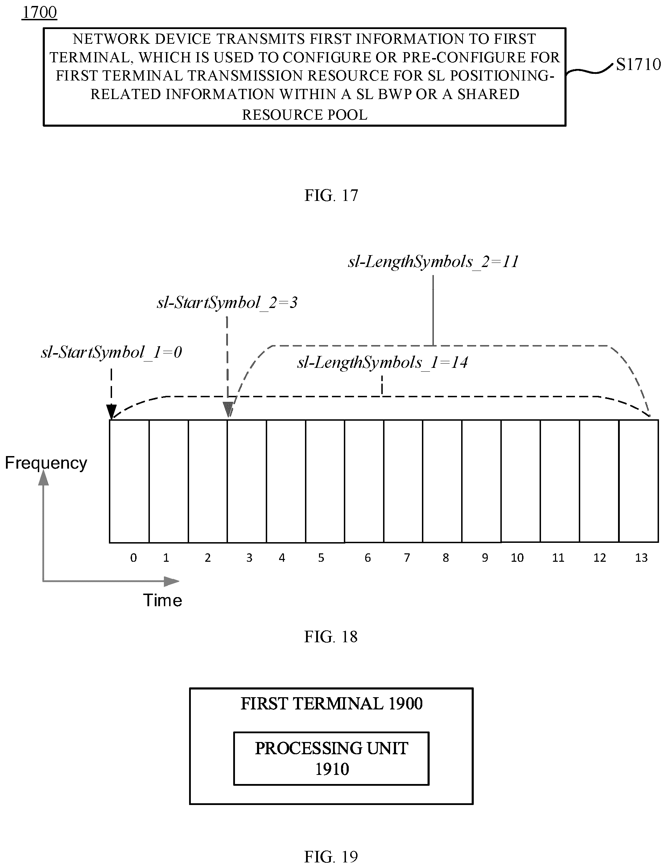

Figure 17 is a schematic flowchart of a sidelink communication method 1700 according to another embodiment of the disclosure. The method includes at least part of the following.

S1710: a network device sends first information to a first terminal, where the first information is used to configure or preconfigure a transmission resource for sidelink positioning-related information within a BWP or in a shared resource pool for the first terminal, and the transmission resource for the sidelink positioning-related information include one or more available transmission starting points.

In one implementation, the transmission resource for the sidelink positioning-related information includes the available transmission starting points for the sidelink positioning-related information.

In one implementation, the first information includes a first configuration and/or a first pre-configuration. The first configuration is used to configure the available transmission starting points for the sidelink positioning-related information, and the first pre-configuration is used to pre-configure the available transmission starting points for the sidelink positioning-related information.

In one implementation, the first information includes a second configuration and/or a second pre-configuration. The second configuration is used to configure the available transmission starting points for the first sidelink information, and the second pre-configuration is used to pre-configure the available transmission starting points for the first sidelink information.

In one implementation, the available transmission starting points for the sidelink positioning-related information include the available transmission starting points for the first sidelink information.

In one implementation, the first sidelink information includes PSCCH and/or PSSCH carrying sidelink data.

In one implementation, the sidelink positioning-related information includes SL PRS and/or the channel indicating SL PRS transmission.

In one implementation, the first information can also be used to configure or pre-configure whether multiple transmission starting points are allowed in the shared resource pool.

Reference can be made to the relevant description of the network device in the aforementioned method embodiments for specific examples of the method 1400 performed by the network device in this embodiment, and for the sake of brevity, it will not be repeated here.

### Example 1:

In the shared resource pool, the available transmission starting points for SL PRS are the same as those for SL-U communication.

In this example, the resource pool where the SL PRS is located can also be used for SL-U communication. That is, in this resource pool, there may be SL PRS sent by a UE, as well as PSSCH and/or PSCCH sent carrying sidelink data by other UEs. In this case, the available transmission starting points for a UE to send SL PRS can be the same as those for PSCCH and/or PSSCH carrying sidelink data.

For example, in a slot, there are two transmission starting points. The first starting point (*sl-StartSymbol_1*) is the OFDM symbol which is the first symbol (e.g., OFDM symbol #0) available for sidelink transmission within the slot, and the second starting point (*sl-StartSymbol_2*) is another OFDM symbol (e.g., OFDM symbol #3) after the first OFDM symbol. The UE can transmit SL PRS starting from one of the two starting points based on the time when LBT is completed, as illustrated in Figure 18. The symbol length (*sl-LengthSymbol_1*) corresponding to the first starting point is 14, and the symbol length (*sl-LengthSymbol_2*) corresponding to the second starting point is 11.

The UE can determine whether multiple transmission starting points are allowed in the resource pool and the position of the second transmission starting point based on configuration information or preconfiguration information of the resource pool, or standard definition.

In this method, when SL PRS and PSCCH and/or PSSCH carrying sidelink data are frequency-division multiplexed, it can avoid the impact of SL PRS on PSCCH/PSSCH.

Preferably, in this method, the bandwidth occupied by SL PRS can be less than the total bandwidth of the resource pool, for example, it can occupy one or more RB sets within the resource pool.

### Example 2:

In the shared resource pool, for slots without a PSFCH, the available transmission starting points for SL PRS include and can be more than those for PSCCH/PSSCH in SL-U communication.

In this example, the resource pool where SL PRS is located is also used for SL-U communication, that is, in this resource pool, there may be SL PRS sent by a UE and PSCCH and/or PSSCH carrying sidelink data sent by other UEs. In this case, the available transmission starting points for SL PRS sent by the UE include and can be more than those for PSCCH and/or PSSCH carrying sidelink data, and the following approaches can be adopted.

Approach 1: In a slot, PSCCH and/or PSSCH carrying sidelink data can use two transmission starting points, and SL PRS can use these two starting points. However, there may be one or more additional starting points available for SL PRS transmission after these two available starting points.

For example, in Figure 18, the available starting points for PSCCH and/or PSSCH carrying sidelink data are OFDM symbol #0 and OFDM symbol #3 respectively. The UE can transmit SL PRS using these two starting points, and there may also be one or more additional starting points for SL PRS transmission after OFDM symbol #3.

To avoid the impact of SL PRS transmitted by the UE on the AGC of the UE receiving PSCCH and/or PSSCH carrying sidelink data, the following processing methods can be adopted.

(1) The UE detects PSCCH sent by other UEs at the above two starting points. If no PSCCH sent by other UEs and indicating PSSCH transmission in the current slot is detected at these two starting points, the UE can start transmitting SL PRS at a starting point after the two starting points.

(2) Or, if the UE starts transmitting SL PRS at one of the first two starting points, the bandwidth used by the UE to transmit SL PRS can be less than the bandwidth of the resource pool. If the UE starts transmitting SL PRS at a starting point after the first two starting points, the bandwidth used by the UE to transmit SL PRS can be equal to the bandwidth of the resource pool. When the UE selects the transmission resource for SL PRS, if an SL PRS resource overlaps with a resource reserved by other UEs, the UE should exclude such SL PRS resource.

In this approach, when SL PRS occupies all the frequency-domain resources in the resource pool, more starting points can provide more transmission opportunities for SL PRS. Moreover, the first two starting points for SL PRS are the same as those for PSCCH and/or PSSCH carrying sidelink data, which can avoid the impact of SL PRS on PSCCH/PSSCH transmission.

Approach 2: In a slot, PSCCH and/or PSSCH carrying sidelink data can use two transmission starting points, and SL PRS can use these two starting points. However, in addition to these two available starting points, there may be one or more additional starting points for SL PRS transmission, which can be located before or after the second transmission starting point for PSCCH/PSSCH.

For example, in Figure 18, the available starting points for PSCCH and/or PSSCH carrying sidelink data are OFDM symbol #0 and OFDM symbol #3 respectively. The UE can transmit SL PRS by using these two transmission starting points, and there may also be one or more additional starting points for SL PRS transmission before or after OFDM symbol #3.

To avoid the impact of SL PRS transmitted by the UE on the AGC of the UE receiving PSCCH and/or PSSCH carrying sidelink data, the following processing methods can be adopted.

(1) The UE detects PSCCH sent by other UEs at the first or second starting point. If no PSCCH indicating PSSCH transmission in the current slot is detected at the first or second starting point, the UE can start to transmit SL PRS at a starting point after the first or second starting point.

(2) Or, if the UE starts transmitting SL PRS at the first or second starting point, the bandwidth used by the UE to transmit SL PRS can be less than the bandwidth of the resource pool. If the UE starts transmitting SL PRS at another starting point, the bandwidth used by the UE to transmit SL PRS can be equal to the bandwidth of the resource pool. When the UE selects a transmission resource for SL PRS, if an SL PRS resource overlaps with a resource reserved by other UEs, the UE should exclude this SL PRS resource.

In this approach, if there are additional starting points for SL PRS transmission between the first and second starting points, the number and position of these additional starting points can be configured by the network or preconfigured. If the UE starts to transmit SL PRS at any of the starting points between the first and second starting points, the priority of SL PRS transmission by the UE can be higher than a specific value, which can be configured by a network or preconfigured or defined by the standard.

In this approach, when SL PRS occupies all the frequency-domain resources in the resource pool, more starting points can provide more transmission opportunities for SL PRS. Moreover, the first two starting points for SL PRS are the same as those for PSCCH and/or PSSCH carrying sidelink data, which can avoid the impact of SL PRS on PSCCH/PSSCH transmission.

The UE can determine whether there is a second starting point available for PSCCH and/or PSSCH carrying sidelink data within the resource pool, based on the configuration information or pre-configuration information of the resource pool, or standard definitions. The UE can also determine whether there are other starting points available for SL PRS transmission within the resource pool in addition to the two starting points, based on the configuration information or pre-configuration information of the resource pool.

In this example, the index n of the last starting symbol for SL PRS transmission should not exceed $N\text{-}p$. Here, $N$ represents the index of the last OFDM symbol in a slot available for PSSCH transmission, and $p$ is the minimum number of OFDM symbols occupied by an SL PRS resource. The value of $p$ can be configured by the network, pre-configured, or defined by standards.

### Example 3:

In the shared resource pool, for slots with a PSFCH, the available transmission starting points for SL PRS include an OFDM symbol which is the first symbol available for sidelink transmission within the slot, can include an OFDM symbol which is the first symbol available for PSFCH transmission, and can also include other OFDM symbols within the slot.

For example, for slots with a PSFCH, PSCCH and/or PSSCH carrying sidelink data can only be transmitted starting from an OFDM symbol which is the first symbol available for sidelink transmission within the slot, and there is no second starting point. In this example, the following approaches can be adopted to determine the available transmission starting points for SL PRS.

Approach 1: The available transmission starting points for SL PRS include the OFDM symbol which is the first symbol available for sidelink transmission within the slot. If RBs are configured for SL PRS transmission on OFDM symbols available for PSFCH transmission, SL PRS can be transmitted starting from the OFDM symbol which is the first symbol available for PSFCH transmission.

In this approach, there are no other available starting points for SL PRS transmission within the time range for transmission of PSCCH and/or PSSCH carrying sidelink data, which can maximize the avoidance of the impact of SL PRS on the reception of PSCCH/PSSCH.

Approach 2: The transmission starting points for SL PRS include an OFDM symbol which is the first symbol available for sidelink transmission within the slot. If RBs are configured for SL PRS transmission on OFDM symbols available for PSFCH transmission, SL PRS can be transmitted starting from an OFDM symbol which is the first symbol available for PSFCH transmission. In addition to this, there may be other starting points available for SL PRS transmission between the first starting point and the OFDM symbol which is the first symbol available for PSFCH.

The index $n$ of the last starting symbol available for SL PRS transmission before the OFDM symbol available for PSFCH transmission should not be greater than $N-3-p+1,$ where $N$ is the index of the last OFDM symbol available for PSSCH transmission within the slot, and $p$ is the minimum number of OFDM symbols occupied by an SL PRS resource. The value of $p$ can be configured by the network or preconfigured, or defined by the standard.

The UE detects PSCCH at an OFDM symbol which is the first symbol available for sidelink transmission within the slot. If no PSCCH sent by other terminals is detected, the UE can start to transmit SL PRS at other starting points.

If the UE transmits SL PRS at other starting points available for SL PRS transmission, the bandwidth used by the UE to transmit SL PRS should be the same as the bandwidth of the resource pool.

### Example 4:

In the BWP or in the resource pool, the starting points available for SL PRS transmission are configured by the network or preconfigured.

In this example, the starting points for SL PRS transmission can be configured by network or preconfigured. Such configuration or preconfiguration can be for the entire BWP where SL PRS is located, or for the resource pool where SL PRS is located.

Assuming there are first configuration/preconfiguration and second configuration/preconfiguration for the SL BWP or resource pool, where the first configuration/preconfiguration is specifically used to indicate the starting points available for SL PRS transmission, and the second configuration/preconfiguration is specifically used to indicate the starting points available for the transmission of PSCCH and/or PSSCH carrying sidelink data. In the SL BWP or resource pool, the available starting points for SL PRS transmission include the starting points indicated by the first configuration/preconfiguration and the second configuration/preconfiguration.

The sidelink communication method proposed in this disclosure is a method for transmitting SL PRS over unlicensed spectrum. In one example, in the shared resource pool, the available transmission starting points for SL PRS are the same as those for SL-U communication. In another example, for slots without a PSFCH, the transmission starting points available for SL PRS include and can be more than those for PSCCH/PSSCH in SL-U communication. In another example, in the shared resource pool, for slots with a PSFCH, the transmission starting points available for SL PRS include the OFDM symbol which is the first symbol available for sidelink transmission within the slot, can include the OFDM symbol which is the first symbol available for PSFCH transmission, and can also include other OFDM symbols within the slot. In another example, in the SL BWP or resource pool, the starting points available for SL PRS transmission are configured by the network or preconfigured. By using the method proposed in this application, the transmission opportunities for SL PRS over unlicensed spectrum can be increased, thereby improving the reliability and accuracy of positioning.

Figure 19 is a schematic block diagram of a first terminal 1900 according to an embodiment of the disclosure. The first terminal 1900 may include a processing unit 1910.

The processing unit 1910 is configured to obtain a transmission resource for sidelink positioning-related information based on a transmission resource for first sidelink information, where the transmission resource for the sidelink positioning-related information include one or more available transmission starting points.

In one embodiment, the sidelink positioning-related information includes SL PRS and/or a channel indicating SL BWP transmission.

In one embodiment, the first sidelink information includes a PSCCH and/or a PSSCH carrying sidelink data.

In one embodiment, within a shared resource pool for the sidelink positioning-related information and the first sidelink information, the available transmission starting points for the sidelink positioning-related information are the same as the available transmission starting points for the first sidelink information.

In one embodiment, within a slot of the shared resource pool, there are a first transmission starting point and a second transmission starting point, the first transmission starting point is a first OFDM symbol which is the first symbol available for sidelink transmission within the slot, and the second transmission starting point is a second OFDM symbol available for sidelink transmission after the first OFDM symbol.

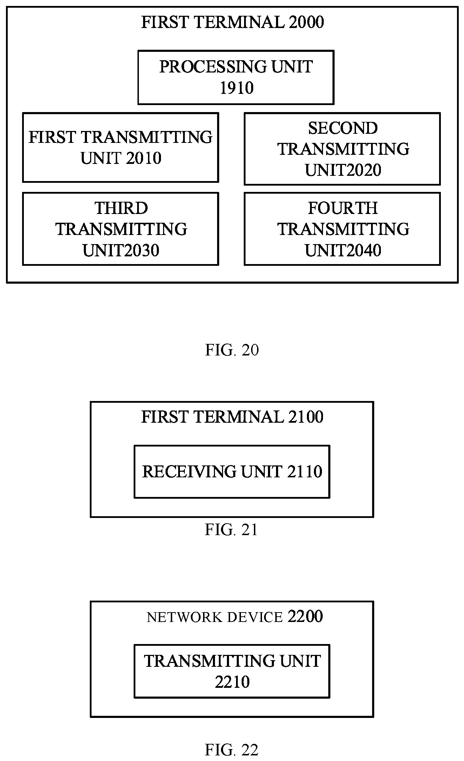

In one embodiment, as illustrated in Figure 20, the first terminal 2000 further includes a first transmitting unit 2010, which is configured to transmit sidelink positioning-related information starting from the first transmission starting point or the second transmission starting point based on the time when LBT is completed.

In one embodiment, whether multiple transmission starting points are allowed in the shared resource pool and a position of the second transmission starting point are determined based on configuration information of the shared resource pool, pre-configuration information of the shared resource pool, or standard definitions.

In one embodiment, the sidelink positioning-related information and the first sidelink information are frequency-division multiplexed.

In one embodiment, a bandwidth occupied by the sidelink positioning-related information is smaller than a total bandwidth of the shared resource pool.

In one embodiment, the bandwidth occupied by the sidelink positioning-related information comprises one or more RB sets in the shared resource pool.

In one embodiment, in a shared resource pool for the sidelink positioning-related information and the first sidelink information, within a first slot where no PSFCH exists, the available transmission starting points for the sidelink positioning-related information comprises the available transmission starting points for the first sidelink information.

In one embodiment, the available transmission starting points for the sidelink positioning-related information are more than those of the first sidelink information.

In one embodiment, a third transmission starting point and a fourth transmission starting point exist within a first slot of the shared resource pool, the third transmission starting point is a first OFDM symbol within the first slot that is the first symbol available for sidelink transmission, the fourth transmission starting point is a fourth OFDM symbol available for sidelink transmission after the third OFDM symbol, and the available transmission starting points for the sidelink positioning-related information includes the third transmission starting point, the fourth transmission starting point, and at least one fifth transmission starting point, the fifth transmission starting point is a fifth OFDM symbol within the first slot available for transmitting the sidelink positioning-related information but unavailable for transmitting the first sidelink information.

In one embodiment, the fifth transmission starting point is after the fourth transmission starting point. The processing unit 1910 is further configured to detect PSCCH at the position of the third transmission starting point and/or the fourth transmission starting point of the first sidelink information.

As illustrated in Figure 20, the first terminal 2000 further includes: a second transmitting unit 2020, which is configured to transmit sidelink positioning-related information starting from the fifth transmission starting point when no PSCCH indicating PSSCH transmission in the first slot is detected at the position of the third transmission starting point and/or the fourth transmission starting point for the first sidelink information.

In one implementation, the fifth transmission starting point is after the third transmission starting point and before the fourth transmission starting point. The processing unit 1910 is further configured to detect PSCCH at the position of an available transmission starting point for the first sidelink information before the fifth transmission starting point.

As illustrated in Figure 20, the first terminal 2000 further includes: a third transmitting unit 2030, which is configured to transmit sidelink positioning-related information starting from the fifth transmission starting point when no PSCCH indicating PSSCH transmission in the first slot is detected at the position of the available transmission starting point of the first sidelink information.

In one implementation, when the first terminal transmits sidelink positioning-related information at the fifth transmission starting point, the bandwidth for the first terminal to transmit the sidelink positioning-related information is equal to a total bandwidth of the shared resource pool.

In one implementation, in a case where the first terminal transmits the sidelink positioning-related information starting from the third transmission starting point or the fourth transmission starting point, a bandwidth for the first terminal to transmit the sidelink positioning-related information is smaller than a total bandwidth of the shared resource pool.

In one implementation, an index n of a last starting symbol available for transmitting the sidelink positioning-related information within the first slot satisfies $n \leq N\text{-}p$, where $N$ is an index of a last OFDM symbol available for sidelink transmission within the first slot, and $p$ is a minimum number of OFDM symbols occupied by a transmission resource for the sidelink positioning-related information.

In one implementation, in a shared resource pool for the sidelink positioning-related information and the first sidelink information, within a second slot where a PSFCH exists, the available transmission starting points for the sidelink positioning-related information include at least one of: a sixth transmission starting point, being a sixth OFDM symbol within the second slot that is the first symbol available for sidelink transmission; a seventh transmission starting point, being a seventh OFDM symbol within the second slot that is the first symbol available for PSFCH transmission; or an eighth transmission starting point, being an eighth OFDM symbol within the second slot other than the sixth OFDM symbol and/or the seventh OFDM symbol.

In one implementation, the available transmission starting points for sidelink positioning-related information include the sixth OFDM symbol within the second slot, and there are RBs configured for the transmission of sidelink positioning-related information on the OFDM symbols used for PSFCH transmission. The first terminal transmits sidelink positioning-related information starting from the seventh OFDM symbol.

In one implementation, the eighth transmission starting point is between the sixth OFDM symbol and the seventh OFDM symbol, and the eighth transmission starting point is available for the transmission of sidelink positioning-related information.

In one implementation, an index $n$ of a last OFDM symbol available for transmitting the sidelink positioning-related information before an OFDM symbol available for PSFCH transmission satisfies $n \leq N\text{-}3\text{-}p\text{+}1$, where $N$ is an index of a last OFDM symbol available for sidelink transmission within the slot, and $p$ is a minimum number of OFDM symbols occupied by a transmission resource for the sidelink positioning-related information.

In one implementation, the value of $p$ is configured by the network or preconfigured, or defined by the standard.

In one implementation, as illustrated in Figure 20, the first terminal 2000 further includes: a fourth transmitting unit 2040, which is configured to transmit sidelink positioning-related information starting from the eighth transmission starting point when no PSCCH indicating PSSCH transmission is detected at the sixth transmission starting point in the second slot.

In one implementation, if the first terminal transmits sidelink positioning-related information at the eighth transmission starting point, the bandwidth for the first terminal to transmit the sidelink positioning-related information is the same as a bandwidth of the shared resource pool.

In one implementation, the processing unit 1910 is further configured to exclude the transmission resource for the sidelink positioning-related information when there is an overlap between the transmission resource for the sidelink positioning-related information and the resource reserved by the second terminal.

The first terminal 1900 and 2000 according to the embodiments of the disclosure can implement the corresponding functions of the first terminal in the aforementioned method embodiments. The corresponding processes, functions, implementations, and technical effects of the modules (sub-modules, units, or components) in the first terminal 1900 and 2000 can refer to the corresponding descriptions in the aforementioned method embodiments, and will not be repeated here. It should be noted that the functions described for the modules (sub-modules, units, or components) in the first terminal 1900 and 2000 can be implemented by different modules (sub-modules, units, or components), or can be implemented by the same module (sub-module, unit, or component).

Figure 21 is a schematic block diagram of a first terminal 2100 according to an embodiment of the disclosure. The first terminal 2100 may include a receiving unit 2110, which is configured to receive first information, where the first information is used to configure or preconfigure a transmission resource for sidelink positioning-related information within a BWP or in a shared resource pool, and the transmission resource for the sidelink positioning-related information include one or more available transmission starting points.

In one implementation, the transmission resource for the sidelink positioning-related information includes available transmission starting points for the sidelink positioning-related information.

In one implementation, the first information includes a first configuration and/or a first pre-configuration. The first configuration is used to configure the available transmission starting points for the sidelink positioning-related information, and the first pre-configuration is used to pre-configure the available transmission starting points for the sidelink positioning-related information.

In one implementation, the first information includes a second configuration and/or a second pre-configuration. The second configuration is used to configure the available transmission starting points for the first sidelink information, and the second pre-configuration is used to pre-configure the available transmission starting points for the first sidelink information.

In one implementation, the available transmission starting points for the sidelink positioning-related information include the available transmission starting points for the first sidelink information.

In one implementation, the first sidelink information includes PSCCH and/or PSSCH carrying sidelink data.

In one implementation, the sidelink positioning-related information includes SL PRS and/or the channel indicating SL PRS transmission.

The first terminal 2100 according to the embodiments of the disclosure can implement the corresponding functions of the first terminal in the aforementioned method embodiments. The corresponding processes, functions, implementation methods, and technical effects of the modules (sub-modules, units, or components) in the first terminal 2100 can refer to the corresponding descriptions in the aforementioned method embodiments, and will not be repeated here. It should be noted that the functions described for the modules (sub-modules, units, or components) in the first terminal 2100 can be implemented by different modules (sub-modules, units, or components), or can be implemented by the same module (sub-module, unit, or component).

Figure 22 is a schematic block diagram of a network device 2200 according to an embodiment of the disclosure. The network device 2200 may include a transmitting unit 2210, which is configured to send first information to a first terminal, where the first information is used to configure or preconfigure a transmission resource for sidelink positioning-related information within a BWP or in a shared resource pool for the first terminal, and the transmission resource for the sidelink positioning-related information include one or more available transmission starting points.

In one implementation, the transmission resource for the sidelink positioning-related information includes the available transmission starting points for the sidelink positioning-related information.

In one implementation, the first information includes a first configuration and/or a first pre-configuration. The first configuration is used to configure the available transmission starting points for the sidelink positioning-related information, and the first pre-configuration is used to pre-configure the available transmission starting points for the sidelink positioning-related information.

In one implementation, the first information includes a second configuration and/or a second pre-configuration. The second configuration is used to configure the available transmission starting points for the first sidelink information, and the second pre-configuration is used to pre-configure the available transmission starting points for the first sidelink information.

In one implementation, the available transmission starting points for the sidelink positioning-related information include the available transmission starting points for the first sidelink information.

In one implementation, the first sidelink information includes PSCCH and/or PSSCH carrying sidelink data.

In one implementation, the sidelink positioning-related information includes SL PRS and/or the channel indicating SL PRS transmission.

The network device 2200 according to the embodiments of the disclosure can implement the corresponding functions of the network device in the aforementioned method embodiments. The corresponding processes, functions, implementation methods, and technical effects of the modules (sub-modules, units, or components) in the network device 2200 can refer to the corresponding descriptions in the aforementioned method embodiments, and will not be repeated here. It should be noted that the functions described for the modules (sub-modules, units, or components) in the network device 2200 can be implemented by different modules (sub-modules, units, or components), or can be implemented by the same module (sub-module, unit, or component).

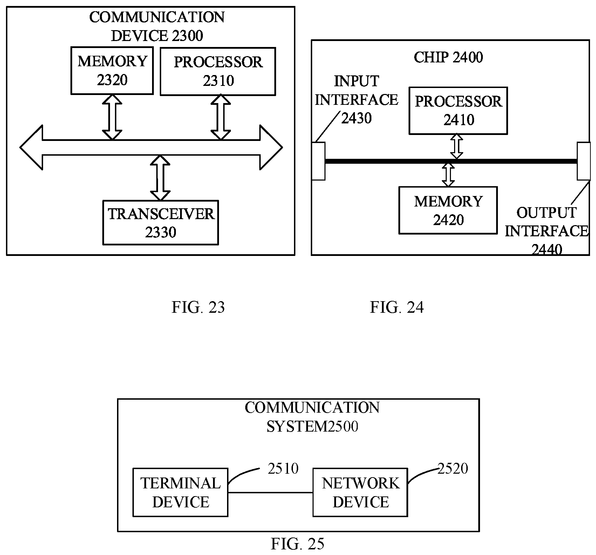

Figure 23 is a schematic structural diagram of a communication device 2300 according to an embodiment of the disclosure. The communication device 2300 includes a processor 2310, which can call and run a computer program from the memory to enable the communication device 2300 to implement the method according to the embodiments of the disclosure.

In an implementation, the communication device 2300 may also include a memory 2320. The processor 2310 can call and run a computer program from the memory 2320 to enable the communication device 2300 to implement the method according to the embodiments of the disclosure.

The memory 2320 can be a separate device independent of the processor 2310, or it can be integrated into the processor 2310.

In an implementation, the communication device 2300 may also include a transceiver 2330. The processor 2310 can control the transceiver 2330 to communicate with other devices, specifically, to send information or data to other devices or receive information or data sent by other devices.

The transceiver 2330 may include a transmitter and a receiver. The transceiver 2330 may further include one or more antennas.

In an implementation, the communication device 2300 may be a network device according to the embodiments of the disclosure, and the communication device 2300 can implement the corresponding processes of the network device in the aforementioned method embodiments. For the sake of brevity, it will not be repeated here.

In an implementation, the communication device 2300 may be a terminal device (e.g., the first terminal) according to the embodiments of the disclosure, and the communication device 2300 can implement the corresponding processes of the terminal device (e.g., the first terminal) in the aforementioned method embodiments. For the sake of brevity, it will not be repeated here.

Figure 24 is a schematic structural diagram of a chip 2400 according to an embodiment of the disclosure. The chip 2400 includes a processor 2410, which can call and run a computer program from the memory to implement the method according to the embodiments of the disclosure.

In an implementation, the chip 2400 may also include a memory 2420. The processor 2410 can call and run a computer program from the memory 2420 to implement the method according to the embodiments of the disclosure.

The memory 2420 can be a separate device independent of the processor 2410, or it can be integrated into the processor 2410.

In an implementation, the chip 2400 may also include an input interface 2430. The processor 2410 can control the input interface 2430 to communicate with other devices or chips, specifically, to obtain information or data sent by other devices or chips.

In an implementation, the chip 2400 may also include an output interface 2440. The processor 2410 can control the output interface 2440 to communicate with other devices or chips, specifically, to output information or data to other devices or chips.

In an implementation, the chip can be applied to the network device according to the embodiments of the disclosure, and the chip can implement the corresponding processes of the network device in the aforementioned method embodiments. For the sake of brevity, it will not be repeated here.

In an implementation, the chip can be applied to the terminal device (e.g., the first terminal) according to the embodiments of the disclosure, and the chip can implement the corresponding processes of the terminal device (e.g., the first terminal) in the aforementioned method embodiments. For the sake of brevity, it will not be repeated here.

The chips applied to the network device and the terminal device can be the same or different chips.

It should be understood that the chip mentioned in the embodiments of the disclosure can also be referred to as a system-on-chip, a chip system, a chip on a system, or a system on a chip, etc.

The processor mentioned above can be a general-purpose processor, a digital signal processor (DSP), a field-programmable gate array (FPGA), an application-specific integrated circuit (ASIC), or other programmable logic devices, transistor logic devices, discrete hardware components, etc. The general-purpose processor mentioned above can be a microprocessor or any other conventional processor.

The memory mentioned above can be a volatile memory or a non-volatile memory, or it can include both volatile and non-volatile memories. The non-volatile memory can be a read-only memory (ROM), a programmable ROM (PROM), an erasable programmable ROM (EPROM), an electrically erasable programmable ROM (EEPROM), or a flash memory. The volatile memory can be a random access memory (RAM).

It should be understood that the memory mentioned above is illustrative but not restrictive. For example, the memory in the embodiments of the disclosure can also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct Rambus RAM (DR RAM), etc. In other words, the memory in the embodiments of the disclosure is intended to include but not limited to these and any other suitable types of memories.

Figure 25 is a schematic block diagram of a communication system 2500 according to an embodiment of the disclosure. The communication system 2500 includes a terminal device 2510 and a network device 2520.

The terminal device 2510 is configured to obtain a transmission resource for sidelink positioning-related information based on a transmission resource for first sidelink information.

In an implementation, the network device 2520 is configured to configure or preconfigure whether multiple transmission starting points are allowed in a shared resource pool, and the transmission resource for the first sidelink information.

In one embodiment, the network device 2520 is configured to send first information, where the first information is used to configure or preconfigure the transmission resource for the sidelink positioning-related information within a BWP or in the shared resource pool. The terminal device 2510 is configured to receive the first information.

The terminal device 2510 can implement the corresponding functions of the terminal device in the aforementioned method embodiments, and the network device 2520 can implement the corresponding functions of the network device in the aforementioned method embodiments. For the sake of brevity, it will not be repeated here.

In the embodiments described above, the processes can be fully or partially implemented through software, hardware, firmware, or any combination thereof. When implemented through software, the processes can be fully or partially realized in the form of a computer program product. The computer program product includes one or more computer instructions. When the computer program instructions are loaded and executed on a computer, the processes or functions in accordance with the embodiments of the disclosure are fully or partially generated. The computer can be a general-purpose computer, a dedicated computer, a computer network, or any other programmable device. The computer instructions can be stored in a computer-readable storage medium or transmitted from one computer-readable storage medium to another. For example, the computer instructions can be transmitted from a website, a computer, a server, or a data center to another website, computer, server, or data center through a wired (e.g., coaxial cable, optical fiber, digital subscriber line (DSL)) or wireless (e.g., infrared, wireless, microwave) manner. The computer-readable storage medium can be any available medium that can be accessed by a computer, or it can be a data storage device integrating one or more available media, such as a server, a data center, etc. The available medium can be a magnetic medium (e.g., floppy disk, hard disk, magnetic tape), an optical medium (e.g., DVD), or a semiconductor medium (e.g., solid-state disk (SSD)), etc.

It should be understood that in the various embodiments of the disclosure, the sequence numbers of the above processes do not imply the execution order. The execution order of the processes should be determined based on their functions and internal logic, and should not be construed as limiting the scope of the disclosure.

Those skilled in the art can clearly understand that, for the sake of convenience and brevity in description, the specific working processes of the above-mentioned systems, devices, and units can refer to the corresponding processes in the aforementioned method embodiments, and will not be repeated here.

The embodiments described above are merely specific implementations of the disclosure, but the scope of protection of the disclosure is not limited thereto. Any changes or substitutions that can be easily conceived by those skilled in the art within the technical scope disclosed in the disclosure should be covered within the scope of protection of the disclosure. Therefore, the scope of protection of the disclosure should be subject to the scope of protection defined by the claims.

**Claims**

1. A sidelink communication method, comprising:
   obtaining, by a first terminal, a transmission resource for sidelink positioning-related information based on a transmission resource for first sidelink information, wherein the transmission resource for the sidelink positioning-related information comprises one or more available transmission starting points.

2. The method of claim 1, wherein the sidelink positioning-related information comprises a sidelink positioning reference signal (SL PRS) and/or a channel indicating SL PRS transmission.

3. The method according to claim 1 or 2, wherein the first sidelink information comprises a physical sidelink control channel (PSCCH) and/or a physical sidelink shared channel (PSSCH) carrying sidelink data.

4. The method according to any one of claims 1 to 3, wherein, within a shared resource pool for the sidelink positioning-related information and the first sidelink information, the available transmission starting points for the sidelink positioning-related information are the same as available transmission starting points for the first sidelink information.

5. The method according to claim 4, wherein a first transmission starting point and a second transmission starting point exist within a slot of the shared resource pool, the first transmission starting point being a first orthogonal frequency division multiplexing (OFDM) symbol which is the first symbol available for sidelink transmission within the slot, and the second transmission starting point being a second OFDM symbol available for sidelink transmission after the first OFDM symbol.

6. The method according to claim 5, further comprising:
   transmitting, by the first terminal, the sidelink positioning-related information starting from the first transmission starting point or the second transmission starting point based on a time at which listen-before-talk (LBT) is completed.

7. The method according to claim 5 or 6, wherein whether a plurality of transmission starting points are allowed in the shared resource pool and a position of the second transmission starting point are determined based on configuration information of the shared resource pool, pre-configuration information of the shared resource pool, or standard definitions.

8. The method according to any one of claims 2 to 7, wherein the sidelink positioning-related information and the first sidelink information are frequency-division multiplexed.

9. The method according to any one of claims 2 to 8, wherein a bandwidth occupied by the sidelink positioning-related information is smaller than a total bandwidth of the shared resource pool.

10. The method according to claim 9, wherein the bandwidth occupied by the sidelink positioning-related information comprises one or more resource block (RB) sets in the shared resource pool.

11. The method according to any one of claims 1 to 3, wherein, in a shared resource pool for the sidelink positioning-related information and the first sidelink information, within a first slot where no physical sidelink feedback channel (PSFCH) exists, the available transmission starting points for the sidelink positioning-related information comprises available transmission starting points for the first sidelink information.

12. The method according to claim 11, wherein the available transmission starting points for the sidelink positioning-related information are more than those for the first sidelink information.

13. The method according to claim 11 or 12, wherein a third transmission starting point and a fourth transmission starting point exist within a first slot of the shared resource pool, the third transmission starting point being a first OFDM symbol within the first slot that is the first symbol available for sidelink transmission, the fourth transmission starting point being a fourth OFDM symbol available for sidelink transmission after the third OFDM symbol, and the available transmission starting points for the sidelink positioning-related information comprises the third transmission starting point, the fourth transmission starting point, and at least one fifth transmission starting point, the fifth transmission starting point being a fifth OFDM symbol within the first slot available for transmitting the sidelink positioning-related information but unavailable for transmitting the first sidelink information.

14. The method according to any one of claims 11 to 13, wherein the fifth transmission starting point is after the fourth transmission starting point, and the method further comprises:

   detecting, by the first terminal, a PSCCH at the third transmission starting point and/or the fourth transmission starting point for the first sidelink information; and
   transmitting, by the first terminal, the sidelink positioning-related information starting from the fifth transmission starting point, in response to no PSCCH indicating PSSCH transmission within the first slot being detected at the third transmission starting point and/or the fourth transmission starting point.

15. The method according to any one of claims 11 to 13, wherein the fifth transmission starting point is after the third transmission starting point and before the fourth transmission starting point, and the method further comprises:

   detecting, by the first terminal, a PSCCH at an available transmission starting point for the first sidelink information before the fifth transmission starting point; and
   transmitting, by the first terminal, the sidelink positioning-related information starting from the fifth transmission starting point, in response to no PSCCH indicating PSSCH transmission within the first slot being detected at the available transmission starting point for the first sidelink information.

16. The method according to claim 14 or 15, wherein in a case where the first terminal transmits the sidelink positioning-related information at the fifth transmission starting point, a bandwidth for the first terminal to transmit the sidelink positioning-related information is equal to a total bandwidth of the shared resource pool.

17. The method according to any one of claims 11 to 13, wherein in a case where the first terminal transmits the sidelink positioning-related information starting from the third transmission starting point or the fourth transmission starting point, a bandwidth for the first terminal to transmit the sidelink positioning-related information is smaller than a total bandwidth of the shared resource pool.

18. The method according to any one of claims 11 to 17, wherein an index $n$ of a last starting symbol available for transmitting the sidelink positioning-related information within the first slot satisfies $n \leq N$-$p$, wherein $N$ is an index of a last OFDM symbol available for sidelink transmission within the first slot, and $p$ is a minimum number of OFDM symbols occupied by a transmission resource for the sidelink positioning-related information.

19. The method according to any one of claims 1 to 3, wherein, in a shared resource pool for the sidelink positioning-related information and the first sidelink information, within a second slot where a PSFCH exists, the available transmission starting points for the sidelink positioning-related information comprise at least one of:

   a sixth transmission starting point, being a sixth OFDM symbol within the second slot that is the first symbol available for sidelink transmission;
   a seventh transmission starting point, being a seventh OFDM symbol within the second slot that is the first symbol available for PSFCH transmission; or
   an eighth transmission starting point, being an eighth OFDM symbol within the second slot other than the sixth OFDM symbol and/or the seventh OFDM symbol.

20. The method according to claim 19, wherein the available transmission starting points for the sidelink positioning-related information comprise the sixth OFDM symbol within the second slot, resource blocks (RBs) are used to transmit the sidelink positioning-related information on the OFDM symbol for PSFCH transmission, and the first terminal transmits the sidelink positioning-related information starting from the seventh OFDM symbol.

21. The method according to claim 19 or 20, wherein the eighth transmission starting point is between the sixth OFDM symbol and the seventh OFDM symbol and is available for transmitting the sidelink positioning-related information.

22. The method according to claim 21, wherein an index $n$ of a last OFDM symbol available for transmitting the sidelink positioning-related information before an OFDM symbol available for PSFCH transmission satisfies $n \leq N-3-p+1$, wherein $N$ is an index of a last OFDM symbol available for sidelink transmission within the slot, and $p$ is a minimum number of OFDM symbols occupied by a transmission resource for the sidelink positioning-related information.

23. The method according to claim 18 or 22, wherein a value of $p$ is configured by a network, pre-configured, or defined by a standard.

24. The method according to claim 21 or 22, further comprising:
transmitting, by the first terminal, the sidelink positioning-related information starting from the eighth transmission starting point, in response to no PSCCH indicating PSSCH transmission being detected at the sixth transmission starting point within the second slot.

25. The method according to claim 24, wherein in a case where the first terminal transmits the sidelink positioning-related information at the eighth transmission starting point, a bandwidth for the first terminal to transmit the sidelink positioning-related information is equal to a bandwidth of the shared resource pool.

26. The method according to any one of claims 1 to 25, further comprising:
excluding, by the first terminal, a transmission resource for the sidelink positioning-related information in a case where there is an overlap between the transmission resource for the sidelink positioning-related information and a resource reserved by a second terminal.

27. A sidelink communication method, comprising:
receiving, by a first terminal, first information, wherein the first information is used to configure or pre-configure a transmission resource for sidelink positioning-related information within a sidelink bandwidth part (SL BWP) or a shared resource pool, and the transmission resource for the sidelink positioning-related information comprises one or more available transmission starting points.

28. The method according to claim 27, wherein the transmission resource for the sidelink positioning-related information comprises available transmission starting points for the sidelink positioning-related information.

29. The method according to claim 27 or 28, wherein the first information comprises a first configuration and/or a first pre-configuration, the first configuration being used to configure the available transmission starting points for the sidelink positioning-related information, and the first pre-configuration being used to pre-configure the available transmission starting points for the sidelink positioning-related information.

30. The method according to any one of claims 27 to 29, wherein the first information comprises a second configuration and/or a second pre-configuration, the second configuration being used to configure available transmission starting points for first sidelink information, and the second pre-configuration being used to pre-configure available transmission starting points for the first sidelink information.

31. The method according to claim 30, wherein the available transmission starting points for the sidelink positioning-related information comprise the available transmission starting points for the first sidelink information.

32. The method according to claim 30 or 31, wherein the first sidelink information comprises a physical sidelink control channel (PSCCH) and/or a physical sidelink shared channel (PSSCH) carrying sidelink data.

33. The method according to any one of claims 27 to 32, wherein the sidelink positioning-related information comprises an SL PRS and/or a channel indicating SL PRS transmission.

34. A sidelink communication method, comprising:
transmitting, by a network device, first information to a first terminal, wherein the first information is used to configure or pre-configure for the first terminal a transmission resource for sidelink positioning-related information within a sidelink bandwidth part (SL BWP) or a shared resource pool, and the transmission resource for the sidelink positioning-related information comprises one or more available transmission starting points.

35. The method according to claim 34, wherein the transmission resource for the sidelink positioning-related information comprise available transmission starting points for the sidelink positioning-related information.

36. The method according to claim 34 or 35, wherein the first information comprises a first configuration and/or a first pre-configuration, the first configuration being used to configure the available transmission starting points for the sidelink positioning-related information, and the first pre-configuration being used to pre-configure the available transmission starting points for the sidelink positioning-related information.

37. The method according to any one of claims 34 to 36, wherein the first information comprises a second configuration and/or a second pre-configuration, the second configuration being used to configure available transmission starting points for first sidelink information, and the second pre-configuration being used to pre-configure the available transmission starting points for the first sidelink information.

38. The method according to claim 37, wherein the available transmission starting points for the sidelink positioning-related information comprise the available transmission starting points for the first sidelink information.

39. The method according to claim 37 or 38, wherein the first sidelink information comprises a physical sidelink control channel (PSCCH) and/or a physical sidelink shared channel (PSSCH) carrying sidelink data.

40. The method according to any one of claims 34 to 39, wherein the sidelink positioning-related information comprises an SL PRS and/or a channel indicating SL PRS transmission.

41. A first terminal, comprising:
a processing unit configured to obtain a transmission resource for sidelink positioning-related information based on a transmission resource for first sidelink information, wherein the transmission resource for the sidelink positioning-related information comprises one or more available transmission starting points.

42. The first terminal according to claim 41, wherein the sidelink positioning-related information comprises a sidelink positioning reference signal (SL PRS) and/or a channel indicating SL PRS transmission.

43. The first terminal according to claim 41 or 42, wherein the first sidelink information comprises a physical sidelink control channel (PSCCH) and/or a physical sidelink shared channel (PSSCH) carrying sidelink data.

44. The first terminal according to any one of claims 41 to 43, wherein, within a shared resource pool for the sidelink positioning-related information and the first sidelink information, the available transmission starting points for the sidelink positioning-related information are the same as available transmission starting points for the first sidelink information.

45. The first terminal according to claim 44, wherein a first transmission starting point and a second transmission starting point exist within a slot of the shared resource pool, the first transmission starting point being a first orthogonal frequency division multiplexing (OFDM) symbol that is the first symbol available for sidelink transmission within the slot, and the second transmission starting point being a second OFDM symbol available for sidelink transmission after the first OFDM symbol.

46. The first terminal according to claim 45, further comprising:
a first transmitting unit configured to transmit the sidelink positioning-related information staring from the first transmission starting point or the second transmission starting point based on a time at which listen-before-talk (LBT) is completed.

47. The first terminal according to claim 45 or 46, wherein whether a plurality of transmission starting points are allowed in the shared resource pool and a position of the second transmission starting point are determined based on configuration information of the shared resource pool, pre-configuration information of the shared resource pool, or standard definitions.

48. The first terminal according to any one of claims 42 to 47, wherein the sidelink positioning-related information and the first sidelink information are frequency-division multiplexed.

49. The first terminal according to any one of claims 42 to 48, wherein a bandwidth occupied by the sidelink positioning-related information is smaller than a total bandwidth of the shared resource pool.

50. The first terminal according to claim 49, wherein the bandwidth occupied by the sidelink positioning-related information comprises one or more resource block (RB) sets in the shared resource pool.

51. The first terminal according to any one of claims 41 to 43, wherein, within a shared resource pool for the sidelink positioning-related information and the first sidelink information, within a first slot where no physical sidelink feedback channel (PSFCH) exists, the available transmission starting points for the sidelink positioning-related information comprises available transmission starting points for the first sidelink information.

52. The first terminal according to claim 51, wherein the available transmission starting points for the sidelink positioning-related information are more than those for the first sidelink information.

53. The first terminal according to claim 51 or 52, wherein a third transmission starting point and a fourth transmission starting point exist within a first slot of the shared resource pool, the third transmission starting point being a first OFDM symbol within the first slot that is the first symbol available for sidelink transmission, the fourth transmission starting point being a fourth OFDM symbol available for sidelink transmission after the third OFDM symbol, and the available transmission starting points for the sidelink positioning-related information comprises the third transmission starting point, the fourth transmission starting point, and at least one fifth transmission starting point, the fifth transmission starting point being a fifth OFDM symbol within the first slot available for transmitting the sidelink positioning-related information but unavailable for transmitting the first sidelink information.

54. The first terminal according to any one of claims 51 to 53, wherein the fifth transmission starting point is after the fourth transmission starting point, the processing unit is further configured to detect a PSCCH at the third transmission starting point and/or the fourth transmission starting point for the first sidelink information, and the first terminal further comprises:
a second transmitting unit configured to transmit the sidelink positioning-related information starting from the fifth transmission starting point, in response to no PSCCH indicating PSSCH transmission within the first slot being detected at the third transmission starting point and/or the fourth transmission starting point.

55. The first terminal according to any one of claims 51 to 53, wherein the fifth transmission starting point is after the third transmission starting point and before the fourth transmission starting point, the processing unit is further configured to detect a PSCCH at an available transmission starting point for the first sidelink information before the fifth transmission starting point, and the first terminal further comprises:
a third transmitting unit configured to transmit the sidelink positioning-related information starting from the fifth transmission starting point, in response to no PSCCH indicating PSSCH transmission within the first slot being detected at the available transmission starting point for the first sidelink information.

56. The first terminal according to claim 54 or 55, wherein in a case where the first terminal transmits the sidelink positioning-related information at the fifth transmission starting point, a bandwidth for transmitting the sidelink positioning-related information is equal to a total bandwidth of the shared resource pool.

57. The first terminal according to any one of claims 51 to 53, wherein in a case where the first terminal transmits the sidelink positioning-related information starting from the third transmission starting point or the fourth transmission starting point, a bandwidth for transmitting the sidelink positioning-related information is smaller than a total bandwidth of the shared resource pool.

58. The first terminal according to any one of claims 51 to 57, wherein an index n of the last starting symbol available for transmitting the sidelink positioning-related information within the first slot satisfies $n \leq N-p$, wherein $N$ is an index of the last OFDM symbol available for sidelink transmission within the first slot, and p is a minimum number of OFDM symbols occupied by a transmission resource for the sidelink positioning-related information.

59. The first terminal according to any one of claims 41 to 43, wherein, within a shared resource pool for the sidelink positioning-related information and the first sidelink information, in a second slot where a PSFCH exists, the available transmission starting points for the sidelink positioning-related information comprise at least one of:

a sixth transmission starting point, being a sixth OFDM symbol within the second slot that is the first symbol available for sidelink transmission;
a seventh transmission starting point, being a seventh OFDM symbol within the second slot that is the first symbol available for PSFCH transmission; or

an eighth transmission starting point, being an eighth OFDM symbol within the second slot other than the sixth OFDM symbol and/or the seventh OFDM symbol.

60. The first terminal according to claim 59, wherein the available transmission starting points for the sidelink positioning-related information comprise the sixth OFDM symbol within the second slot, resource blocks (RBs) are used to transmit the sidelink positioning-related information on the OFDM symbol for PSFCH transmission, and the first terminal transmits the sidelink positioning-related information starting from the seventh OFDM symbol.

61. The first terminal according to claim 59 or 60, wherein the eighth transmission starting point is between the sixth OFDM symbol and the seventh OFDM symbol and is available for transmitting the sidelink positioning-related information.

62. The first terminal according to claim 61, wherein an index n of the last OFDM symbol available for transmitting the sidelink positioning-related information before an OFDM symbol available for PSFCH transmission satisfies $n \leq N\text{-}3\text{-}p\text{+}1$, wherein $N$ is an index of the last OFDM symbol available for sidelink transmission within the slot, and p is a minimum number of OFDM symbols occupied by a transmission resource for the sidelink positioning-related information.

63. The first terminal according to claim 58 or 62, wherein a value of $p$ is configured by a network, pre-configured, or defined by a standard.

64. The first terminal according to claim 61 or 62, further comprising:
a fourth transmitting unit, configured to transmit the sidelink positioning-related information starting from the eighth transmission starting point, in response to no PSCCH indicating PSSCH transmission being detected at the sixth transmission starting point within the second slot.

65. The first terminal according to claim 64, wherein in a case where the first terminal transmits the sidelink positioning-related information at the eighth transmission starting point, a bandwidth for the first terminal to transmit the sidelink positioning-related information is equal to a total bandwidth of the shared resource pool.

66. The first terminal according to any one of claims 41 to 65, wherein the processing unit is further configured to exclude a transmission resource for the sidelink positioning-related information in a case where there is an overlap between the transmission resource for the sidelink positioning-related information and a resource reserved by a second terminal.

67. A first terminal, comprising:
a receiving unit, configured to receive first information, wherein the first information is used to configure or preconfigure a transmission resource for sidelink positioning-related information within a sidelink bandwidth part (BWP) or in a shared resource pool, and the transmission resource for the sidelink positioning-related information comprise one or more available transmission starting points.

68. The first terminal according to claim 67, wherein the transmission resource for the sidelink positioning-related information comprise available transmission starting points for the sidelink positioning-related information.

69. The first terminal according to claim 67 or 68, wherein the first information comprises a first configuration and/or a first pre-configuration, the first configuration being used to configure the available transmission starting points for the sidelink positioning-related information, and the first pre-configuration being used to pre-configure the available transmission starting points for the sidelink positioning-related information.

70. The first terminal according to any one of claims 67 to 69, wherein the first information comprises a second configuration and/or a second pre-configuration, the second configuration being used to configure available transmission starting points for first sidelink information, and the second pre-configuration being used to pre-configure the available transmission starting points for the first sidelink information.

71. The first terminal according to claim 70, wherein the available transmission starting points for the sidelink positioning-related information comprise the available transmission starting points for the first sidelink information.

72. The first terminal according to claim 70 or 71, wherein the first sidelink information comprises a physical sidelink control channel (PSCCH) and/or a physical sidelink shared channel (PSSCH) carrying sidelink data.

73. The first terminal according to any one of claims 67 to 72, wherein the sidelink positioning-related information comprises an SL PRS and/or a channel indicating SL PRS transmission.

74. A network device, comprising:
a transmitting unit, configured to transmit first information to a first terminal, wherein the first information is used to configure or pre-configure for the first terminal a transmission resource for sidelink positioning-related information within a sidelink bandwidth part (SL BWP) or a shared resource pool, and the transmission resource for the sidelink positioning-related information comprise one or more available transmission starting points.

75. The network device according to claim 74, wherein the transmission resource for the sidelink positioning-related information comprise available transmission starting points for the sidelink positioning-related information.

76. The network device according to claim 74 or 75, wherein the first information comprises a first configuration and/or a first pre-configuration, the first configuration being used to configure the available transmission starting points for the sidelink positioning-related information, and the first pre-configuration being used to pre-configure the available transmission starting points for the sidelink positioning-related information.

77. The network device according to any one of claims 74 to 76, wherein the first information comprises a second configuration and/or a second pre-configuration, the second configuration being used to configure available transmission starting points for first sidelink information, and the second pre-configuration being used to pre-configure available transmission starting points for the first sidelink information.

78. The network device according to claim 77, wherein the available transmission starting points for the sidelink positioning-related information comprise the available transmission starting points for the first sidelink information.

79. The network device according to claim 77 or 78, wherein the first sidelink information comprises a physical sidelink control channel (PSCCH) and/or a physical sidelink shared channel (PSSCH) carrying sidelink data.

80. The network device according to any one of claims 74 to 79, wherein the sidelink positioning-related information comprises an SL PRS and/or a channel indicating SL PRS transmission.

81. A terminal device, comprising: a processor and a memory, the memory being configured to store a computer program, the processor being configured to call and run the computer program stored in the memory to cause the terminal device to perform the method according to any one of claims 1 to 26 or claims 27 to 33.

82. A network device, comprising: a processor and a memory, the memory being configured to store a computer program, the processor being configured to call and run the computer program stored in the memory to cause the network device to perform the method according to any one of claims 34 to 40.

83. A chip, comprising: a processor, configured to call and run a computer program from the memory to cause a device equipped with the chip to perform the method according to any one of claims 1 to 26, claims 27 to 33, or claims 34 to 40.

84. A computer-readable storage medium, storing a computer program which, when run by a device, causes the device to perform the method according to any one of claims 1 to 26, claims 27 to 33, or claims 34 to 40.

85. A computer program product, comprising computer program instructions which, when executed by a computer, cause the computer to perform the method according to any one of claims 1 to 26, claims 27 to 33, or claims 34 to 40.

86. A computer program which, when executed by a computer, causes the computer to perform the method according to any one of claims 1 to 26, claims 27 to 33, or claims 34 to 40.

87. A communication system, comprising:

a terminal device, configured to perform the method according to any one of claims 1 to 26 or claims 27 to 33; and
a network device, configured to perform the method according to any one of claims 34 to 40.

FIG. 1

FIG. 2

FIG. 3

| RE#0 | RE#1 | RE#2 | RE#3 | RE#4 | RE#5 | RE#6 | RE#7 | RE#8 | RE#9 | RE#10 | RE#11 |
|------|------|------|------|------|------|------|------|------|------|-------|-------|
| PORT 0/PORT 1 | | PORT 0/PORT 1 | | PORT 0/PORT 1 | | PORT 0/PORT 1 | | PORT 0/PORT 1 | | PORT 0/PORT 1 | |

FIG. 4

FIG. 5

FIG. 6

FIG. 7

FIG. 8

FIG. 9

FIG. 10

1100

FIRST TERMINAL OBTAINS TRANSMISSION RESOURCE FOR
SIDELINK POSITIONING-RELATED INFORMATION BASED ON
TRANSMISSION RESOURCE FOR FIRST SIDELINK INFORMATION ⟩∼S1110

FIG. 11

1200

FIRST TERMINAL OBTAINS TRANSMISSION RESOURCE FOR SL
POSITIONING-RELATED INFORMATION BASED ON TRANSMISSION
RESOURCE FOR FIRST SL INFORMATION ⟩∼S1110

FIRST TERMINAL TRANSMITS SL POSITIONING-RELATED
INFORMATION STARTING FROM THE FIRST OR SECOND
TRANSMISSION STARTING POINT BASED ON A TIME AT WHICH LBT
IS COMPLETED ⟩∼S1210

FIG. 12

1300

FIRST TERMINAL OBTAINS TRANSMISSION RESOURCE FOR SL
POSITIONING-RELATED INFORMATION BASED ON TRANSMISSION
RESOURCE FOR FIRST SL INFORMATION ⟩∼S1110

FIRST TERMINAL DETECTS A PSCCH AT THIRD AND/OR FOURTH
TRANSMISSION STARTING POINT FOR FIRST SIDELINK
INFORMATION ⟩∼S1310

FIRST TERMINAL TRANSMITS SL POSITIONING-RELATED
INFORMATION STARTING FROM THE FIFTH TRANSMISSION
STARTING POINT, IF NO PSCCH INDICATING PSSCH TRANSMISSION
WITHIN THE FIRST SLOT BEING DETECTED AT THE THIRD AND/OR
THE FOURTH TRANSMISSION STARTING POINT ⟩∼S1320

FIG. 13

1400

FIRST TERMINAL OBTAINS TRANSMISSION RESOURCE FOR SL POSITIONING-RELATED INFORMATION BASED ON TRANSMISSION RESOURCE FOR FIRST SL INFORMATION ⟩～S1110

FIRST TERMINAL DETECTS PSCCH AT AVAILABLE TRANSMISSION STARTING POINT FOR THE FIRST SL INFORMATION BEFORE THE FIFTH TRANSMISSION STARTING POINT ⟩～S1410

FIRST TERMINAL TRANSMITS SL POSITIONING-RELATED INFORMATION STARTING FROM FIFTH TRANSMISSION STARTING POINT, IF NO PSCCH INDICATING PSSCH TRANSMISSION WITHIN THE FIRST SLOT BEING DETECTED AT AVAILABLE TRANSMISSION STARTING POINT FOR FIRST SL INFORMATION ⟩S1420

FIG. 14

1500

FIRST TERMINAL OBTAINS TRANSMISSION RESOURCE FOR SL POSITIONING-RELATED INFORMATION BASED ON TRANSMISSION RESOURCE FOR FIRST SL INFORMATION ⟩～S1110

FIRST TERMINAL TRANSMITS SL POSITIONING-RELATED INFORMATION STARTING FROM THE EIGHTH TRANSMISSION STARTING POINT, IF NO PSCCH INDICATING PSSCH TRANSMISSION BEING DETECTED AT THE SIXTH TRANSMISSION STARTING POINT WITHIN THE SECOND SLOT ⟩S1510

FIG. 15

1600

FIRST TERMINAL RECEIVES FIRST INFORMATION, WHICH IS USED TO CONFIGURE OR PRE-CONFIGURE TRANSMISSION RESOURCE FOR SL POSITIONING-RELATED INFORMATION WITHIN A SL BWP OR SHARED RESOURCE POOL ⟩～S1610

FIG. 16

1700

NETWORK DEVICE TRANSMITS FIRST INFORMATION TO FIRST TERMINAL, WHICH IS USED TO CONFIGURE OR PRE-CONFIGURE FOR FIRST TERMINAL TRANSMISSION RESOURCE FOR SL POSITIONING-RELATED INFORMATION WITHIN A SL BWP OR A SHARED RESOURCE POOL

S1710

FIG. 17

*sl-LengthSymbols_2=11*

*sl-StartSymbol_2=3*

*sl-StartSymbol_1=0*

*sl-LengthSymbols_1=14*

Frequency

| 0 | 1 | 2 | 3 | 4 | 5 | 6 | 7 | 8 | 9 | 10 | 11 | 12 | 13 |

Time

FIG. 18

FIRST TERMINAL 1900

PROCESSING UNIT 1910

FIG. 19

FIRST TERMINAL 2000

PROCESSING UNIT
1910

FIRST TRANSMITTING
UNIT 2010

SECOND
TRANSMITTING
UNIT2020

THIRD
TRANSMITTING
UNIT2030

FOURTH
TRANSMITTING
UNIT2040

FIG. 20

FIRST TERMINAL 2100

RECEIVING UNIT 2110

FIG. 21

NETWORK DEVICE 2200

TRANSMITTING UNIT
2210

FIG. 22

COMMUNICATION
DEVICE 2300

| MEMORY 2320 | PROCESSOR 2310 |
|---|---|

TRANSCEIVER
2330

FIG. 23

CHIP 2400

INPUT
INTERFACE
2430

PROCESSOR
2410

MEMORY
2420

OUTPUT
INTERFACE
2440

FIG. 24

COMMUNICATION
SYSTEM 2500

| TERMINAL DEVICE | 2510 | NETWORK DEVICE | 2520 |
|---|---|---|---|

FIG. 25

## INTERNATIONAL SEARCH REPORT

| International application No. |
| --- |
| **PCT/CN2022/141513** |

### A.    CLASSIFICATION OF SUBJECT MATTER

H04L 27/00(2006.01)i

According to International Patent Classification (IPC) or to both national classification and IPC

### B.    FIELDS SEARCHED

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 侧行, 侧链路, 旁链路, 副链路, 先听后说, 部分带宽, 定位, 符号, 资源, 信道, 时隙, 参考信号, 指示, 起点, 开始, 起始, 可用, 空闲, side-link, SL, Sidelink, LBT, BWP, PSCCH, PSSCH, PSFCH, SL PRS, OFDM, position, symbol, resource, slot, indicate, origin, start, available

### C.    DOCUMENTS CONSIDERED TO BE RELEVANT

| Category* | Citation of document, with indication, where appropriate, of the relevant passages | Relevant to claim No. |
| --- | --- | --- |
| X | CN 114978451 A (NANJING XINGSI SEMICONDUCTOR CO., LTD.) 30 August 2022 (2022-08-30)<br>   description, paragraphs [0004]-[0263] | 1-87 |
| A | CN 112106425 A (BEIJING XIAOMI MOBILE SOFTWARE CO., LTD.) 18 December 2020 (2020-12-18)<br>   entire document | 1-87 |
| A | CN 114830697 A (GUANGDONG OPPO MOBILE COMMUNICATIONS CO., LTD.) 29 July 2022 (2022-07-29)<br>   entire document | 1-87 |
| A | WO 2022195487 A1 (LENOVO SINGAPORE PTE LTD.) 22 September 2022 (2022-09-22)<br>   entire document | 1-87 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 August 2023** | **14 September 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/141513**

| Patent document cited in search report | | | Publication date (day/month/year) | Patent family member(s) | Publication date (day/month/year) |
|---|---|---|---|---|---|
| CN | 114978451 | A | 30 August 2022 | None | |
| CN | 112106425 | A | 18 December 2020 | None | |
| CN | 114830697 | A | 29 July 2022 | None | |
| WO | 2022195487 | A1 | 22 September 2022 | None | |

Form PCT/ISA/210 (patent family annex) (July 2022)